# EUROPEAN PATENT SPECIFICATION

(11) **EP 4 149 911 B1**
(45) Date of publication and mention of the grant of the patent: **21.08.2024**
(21) Application number: 21724317.9
(22) Date of filing: 12.05.2021
(51) Int. Cl.: C05D 3/00, C05D 9/00, C05G 5/20, C05G 5/23

(54) **WATER-SOLUBLE FERTILIZER**
WASSERLÖSLICHER DÜNGER
ENGRAIS SOLUBLE DANS L'EAU

(30) Priority: 13.05.2020 EP 20174499
(43) Date of publication of application: 22.03.2023
(73) Proprietor: Lima Europe, 2840 Rumst (BE)
(72) Inventor: POCKELÉ, Stefaan, 2650 Edegem (BE); RAEYMAECKERS, Leo, 2840 Reet (BE)
(74) Representative: Gevers Patents
(86) International application number: PCT/EP2021/062584
(87) International publication number: WO 2021/228919

(56) References cited:
- WO-A1-00/63138
- WO-A1-2019/121226
- US-A1- 2019 100 471
- "Water soluble fertilizer additive comprises methanesulfonic acid, dispersing wetting agent, ammonium polyphosphate and urea phosphate, where methanesulfonic acid is salt of calcium or magnesium", WPI / 2017 CLARIVATE ANALYTICS,, vol. 2015, no. 26, 28 January 2015 (2015-01-28), XP002800572
- DATABASE WPI Week 201526, Derwent World Patents Index; AN 2015-188443, XP002800572

## Description

### FIELD OF INVENTION

The present invention relates to an improved fertilizer composition, formulated to provide plant nutrition for growing plants, comprising at least phosphorus (P), calcium (Ca), and sulphur (S) water-soluble fertilizing nutrients. The invention further relates to methods for manufacturing of the same and their use thereof.

### BACKGROUND OF THE INVENTION

For healthy and rapid growth, particularly in a hydroponic environment, it is widely recognized that plants require a nutritionally balanced soluble nutrient feed program. In this regard, for instance, WO 00/63138 A1 describes a dry, concentrated, fertilizer which is readily water-soluble and said fertilizer containing nitrogen, phosphorus and potassium compounds, secondary nutrients, micronutrients, and a growth enhancing mixture comprising at least one or more growth promoters, vitamins, amino acids, carbohydrates, polysaccharides, and adjuvants. WO 00/63138 A1 further discloses a method of applying the solubilized dilute fertilizer to crops to enhance/promote crop production. As another example in this regard, for instance, US 2019/0100471 A1 describes high solids liquid suspension fertilizer compositions containing macronutrients and/or micronutrients, along with a thickener and a dispersant, in order to deliver high levels of macronutrients and/or micronutrients to seeds and plants.

Sulphur is one of the 17 elements essential for plant growth and the fourth most important after nitrogen, phosphorus, and potassium in terms of amounts required by crops. It plays a key role in plant nutrition through its activity in photosynthesis and in the synthesis of amino acids. As with nitrogen, sulphur is a key element in proteins and hence there is a strong nutritional interaction between these essential elements for plant and crop growth, plant and crop development, plant and crop disease resistance and overall plant and crop quality. Consequently, sulphur, like nitrogen, phosphorus, potassium, calcium and magnesium, is a macro nutrient which must be available in relatively large amounts for good plant growth. Those macro nutrients must be presented to plants in a form suitable for plant uptake, translocation and assimilation.

Deficiencies of sulphur in plants are becoming more widespread and can be visually seen and confirmed by plant analysis (Technical Bulletin: Sulfur in Soils by the Fertiliser Technology Research Centre of The University of Adelaide and The Mosaic Company). Generally, younger leaves suffering from a deficiency of sulphur are pale green to yellow in color. Such sulphur deficiencies have become more common in agricultural systems due to, amongst other things, stricter controls on atmospheric emissions of sulphur. Therefore, enhancement of sulphur supply from soil can be achieved by appropriate fertilization.

The most common sulphur fertilizers are based on the addition of sulphate (SO₄²⁻) to soil (e.g. gypsum, ammonium sulphate, potassium sulphate, elemental sulphur etc.), as sulphate is the form in which plant roots take up sulphur. For instance, fertilizers based on elemental sulphur or thiosulphates must be first oxidized to sulphate for plant uptake, and this process relies on microbial activity in soil. Fertilizers based on elemental sulphur are regarded as slow release sources of sulphur for crops (less prone to leaching), while sulphate-based fertilizers are fast release fertilizers (more prone to leaching; sulphate is highly mobile in soil). Leaching can be a significant loss mechanism in light textured soils in higher rainfall environments, or when significant rainfall is common after fertilizer addition and before planting (e.g. fall applications).

Initially, liquid fertilizers typically contain the major macronutrients of nitrogen, phosphorus, and potassium and the micronutrients: iron, manganese, zinc, copper, boron, and molybdenum, and frequently omit the intermediate elements such as calcium, magnesium, and sulphur. Some liquid mineral fertilizers comprising calcium, magnesium, and sulphur mineral nutrients have limited solubility in water and, consequently, insoluble precipitates are formed including insoluble sulphur salts such as calcium sulphate. When using liquid fertilizers of this type, one can experience imbalanced growth and nutrient deficiencies in the plant.

A possible solution to compensate for such insoluble precipitation losses of insoluble sulphur salts to plants is to excessively increase dosage rates. This, however, results in phytotoxicity of plants, early senescence of plants, higher costs, and environmental damage.

Alternatively, the incompatibility between sulphate and metals has required multiple tanks of fertilizer instead of one single system. For example, in order to achieve a complete nutrient profile to plants, the feed program may include at least two nutrient containers of nutrients to avoid or minimize precipitation of sulphates prior to their application to said plant cultures. Two separate concentrated stock solutions have to be prepared to prevent the formation of insoluble sulphur precipitates, which can only be mixed in the final end solution as it is taken up by the plants. Consequently, in a typical setup two tanks with fertilizer mixtures are usually required: tank A for materials compatible with calcium and tank B for materials compatible with sulphur. This is further illustrated by Hoagland's solution (as for example described in WO 2009151677 A2) as a well-known formulation for plant growth. Hoagland's solution contains two separate solutions wherein a first solution includes potassium nitrate, calcium nitrate, monopotassium phosphate, magnesium sulphate, an iron chelate, and a second solution is a micronutrient stock solution that includes boric acid, manganese chloride, zinc sulphate, copper sulphate and molybdic acid. A low pH was achieved by the application of ammonium. In order to apply the Hoagland's solution, this two-solution or two-container approach requires that, in order to provide a complete nutrient feed, one must mix two separate concentrates and dilute each in a user solution to avoid precipitation. From a commercial distribution perspective, one may have to ship sufficient water along with the concentrate in that the water increases handling costs over just the necessary feed.

In recent years thiosulphuric acid salts such as ammonium and potassium thiosulphates have become a useful source of sulphur for use in liquid fertilizers because of their solubility and compatibility with most cations, including calcium. However, liquid fertilizers comprising both calcium and phosphorus will require acidic solutions to prevent the formation of insoluble calcium phosphate, a condition at which thiosulphates will decompose and elemental sulphur will separate and precipitate.

Although elemental sulphur is obviously the most concentrated and least expensive form of sulphur, it is insoluble in all liquid fertilizers. The preferred soluble sulphur compounds most commonly used in liquid fertilizers are the sulphuric acid salts.

WO 2009151677 A2 describes a homogeneous concentrated water-soluble plant fertilizer suspension which comprises water-soluble mineral nutrients such as nitrogen, phosphorus, potassium, calcium, magnesium, and sulphur, where the total mineral nutrient concentration is at least about 80 and may be up to 95 percent by weight of the suspension, and an organic stabilizing compound or additive. As a consequence of the presence of the organic stabilizing compound, the homogeneous suspensions shows sufficient stability over a defined shelf-life period of time, e.g., five day, five weeks, five months, and/or one year. The organic stabilizing compound, between 0.1 and 20 weight percentage of the plant fertilizer suspension, may be comprised of at least one of the following ingredients: polysaccharides and water-soluble hydrocolloid polysaccharides e.g., a starch and cellulose, disaccharides such as cane sugar, malt, molasses, and beet vinasse, fulvic acid, digested plant material, digested lignin, soluble sea weed, compost tea extracts, vermicompost, and chitosan. The plant fertilizer suspension may comprise an amount of sulphur between 0.1 and 10 weight percentage of said plant fertilizer suspension.

EP 0 949 221 A1 describes concentrate liquid fertilizers in which all the six major plant nutrients nitrogen, phosphorus, potassium, calcium, magnesium and sulphur are combined. In these liquid fertilizers, the sulphur is in the form of a polythionic acid compound with the general formula H₂SₙO₆ or a salt thereof. One of the disadvantages is that these polythionic acid compounds and salts thereof needs to be stored by low temperatures such as around 4 °C.

CN 104311236 A discloses a water-soluble fertilizer additive to be used in water-soluble fertilizers, said water-soluble fertilizer additive containing, *inter alia*, dispersing wetting agent coated sulfamic acid fine particles. In particular, CN 104311236 A describes that the water-soluble fertilizer additive containing sulfamic acid impels an ionizing and solubilizing effect on insoluble calcium and magnesium salts that can be present in said water-soluble fertilizers upon addition in water, such as for example calcium superphosphate and calcium magnesium phosphate.

In view of all the above, there is a continuous need to provide improved concentrated liquid fertilizer compositions in which the major plant nutrients such as nitrogen (N), phosphorus (P), potassium (K), calcium (Ca), and sulphur (S) can all be combined in one single concentrate without any precipitation of insoluble salts, such as insoluble calcium phosphate. There is also a further need that said fertilizer composition are easily applicable so all major plant nutrients can be mixed and stored in one single tank prior to plant application, foliar or root feeding. Such a one tank approach would simplify production, reduce handling costs, and increase the overall yield.

### SUMMARY OF THE INVENTION

The Applicant has now surprisingly found that it is possible to provide an improved composition fulfilling the above mentioned needs.

Thus, the primary object of the present invention is a fertilizer composition [composition (C), herein after] wherein the composition (C) comprises, relative to the total weight of composition (C):
a) from 0.5 to 32.0 weight percentage [wt. %, herein after] of at least one sulphur (S) water-soluble fertilizing nutrient chosen from a sulphur compound according to general formula (Is) [compound (S), herein after] 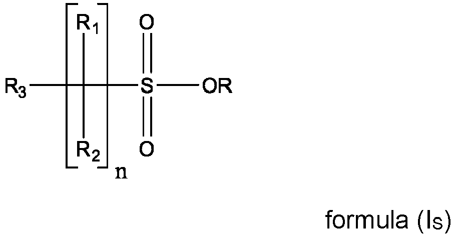 wherein
   - each of R is selected from H or an inorganic cation;
   - n is an integer in the range from 1, 2, or 3;
   - each of R₁ and R₂, equal to or different from each other and at each occurrence, is independently selected from the group consisting of hydrogen, C₁₋₄ alkyl, OR₄, N(R₄)₂, Si(R₄)₃, C(O)OR₄, and CON(R₄)₂, and wherein each of R₄, equal to or different from each other and at each occurrence, is independently selected from the group consisting of hydrogen, C₁₋₄ alkyl, hydroxyl protecting group, and amine protecting group;
   - each of R₃ is independently selected from the group consisting of hydrogen, C₁₋₄ alkyl, C₂₋₄ alkenyl, C₂₋₄ alkynyl, OR₅, N(R₅)₂, Si(R₅)₃, C(O)OR₅, and CON(R₅)₂, and wherein each of R₅, equal to or different from each other and at each occurrence, is independently selected from the group consisting of hydrogen, C₁₋₄ alkyl, hydroxyl protecting group, and amine protecting group,
b) from 1.0 to 20.0 wt. % of water; and
wherein the composition (C) comprises at least one phosphorus (P) and calcium (Ca) water-soluble fertilizing nutrient and wherein the composition (C), relative to the total weight of composition (C), has a total calcium (Ca) content from 0.5 to 32.0 wt. %, as expressed in wt. % of CaO, and a total phosphorus (P) content from 3.0 to 65.0 wt. %, as expressed in wt. % of P₂O₅.

It is a further object of the present invention to provide a method for manufacturing said composition (C).

It is a further object of the present invention to provide a formulation (F) comprising said composition (C).

It is a further object of the present invention to provide a use of said composition (C) and formulation (F) for fertilization purposes.

### DETAILED DESCRIPTION OF THE INVENTION

### COMPOSITION (c)

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that the compound (S) of general formula (I_{S}), as detailed above, present in an amount from 0.5 to 32.0 wt. %, relative to the total weight of composition (C), prevents any precipitation of the constituting ions, i.e. prevents the formation of insoluble salts in the composition (C) comprising at least one phosphorus (P) and calcium (Ca) water-soluble fertilizing nutrient, having a Ca and P content, as detailed above.

Within the context of the present invention, the expression "at least one sulphur (S) water-soluble fertilizing nutrient chosen from a sulphur compound according to general formula (I_{S}) [compound (S), herein after]" is intended to denote one or more than one sulphur (S) water-soluble fertilizing nutrient chosen from a compound (S) according to general formula (I_{S}). Mixtures of sulphur (S) water-soluble fertilizing nutrients where each of the constituting sulphur (S) water-soluble fertilizing nutrients are independently chosen from compounds (S) according to general formula (I_{S}) can also be used for the purpose of the invention.

In the rest of the text, the expression "compound (S)" is understood, for the purposes of the present invention, both in the plural and the singular, that is to say the composition (C) of the present invention may comprise one or more than one compound (S) of formula (I_{S}).

Within the context of the present invention, the expression "from 0.5 to 32.0 weight percentage [wt. %, herein after] of at least one sulphur (S) water-soluble fertilizing nutrient chosen from a sulphur compound according to general formula (I_{S}) [compound (S), herein after]" refers either to the amount of compound (S), when the composition (C) contains only one compound (S), or to the sum of the amounts of compound (S), when the composition (C) contains more than one compound (S). This being said, it means that it is necessary that, when more than one compound (S) is present, then it is the sum of the amounts of each of said compound (S) that ranges from 0.5 to 32.0 wt. %, relative to the total weight of the composition (C).

As used herein the term "alkyl", "alkenyl" and "alkynyl" have the broadest meaning generally understood in the art, and may include a moiety which is linear or branched, or a combination thereof.

The term "alkyl" - alone or in combination means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (*tert*-butyl), 2-methyl-1-propyl (isobutyl).

The term "alkenyl", alone or in combination, means a straight or branched hydrocarbon containing at least one carbon to carbon double bond, for example C_{H-I} alkenyl defines a straight or branched alkenyl radical having from H to I carbon atoms, e.g. C₂₋₄ alkenyl defines a straight or branched alkenyl radical having from 2 to 4 carbon atoms. Examples of C₂₋₄ alkenyl groups include ethenyl, propenyl, isopropenyl, butenyl, and the like.

The term "alkynyl" alone or in combination means a straight, or branched hydrocarbon containing at least one carbon to carbon triple bond, for example C_{J-K} alkynyl defines a straight or branched alkynyl radical having from J to K carbon atoms, e.g. C₂₋₄ alkynyl defines a straight or branched alkynyl radical having from 2 to 4 carbon atoms. Examples of C₂₋₄ alkynyl groups include ethynyl, propynyl, butynyl and the like.

According to the present invention, the compound (S) is according to general formula (Is) 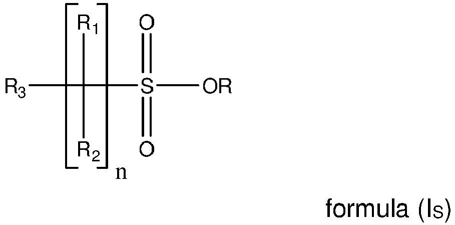 wherein
- each of R is selected from H or an inorganic cation;
- each of n is an integer in the range from 1, 2, or 3;
- each of R₁ and R₂, equal to or different from each other and at each occurrence, is independently selected from the group consisting of hydrogen, C₁₋₄ alkyl, OR₄, N(R₄)₂, Si(R₄)₃, C(O)OR₄, and CON(R₄)₂, and wherein each of R₄, equal to or different from each other and at each occurrence, is independently selected from the group consisting of hydrogen, C₁₋₄ alkyl, hydroxyl protecting group, and amine protecting group;
- each of R₃ is independently selected from the group consisting of hydrogen, C₁₋₄ alkyl, C₂₋₄ alkenyl, C₂₋₄ alkynyl, OR₅, N(R₅)₂, Si(R₅)₃, C(O)OR₅, and CON(R₅)₂, and wherein said and wherein each of R₅, equal to or different from each other and at each occurrence, is independently selected from the group consisting of hydrogen, C₁₋₄ alkyl, hydroxyl protecting group, and amine protecting group,

Preferably, each of R is selected from H or an inorganic cation selected from the group consisting of an alkali metal cation, an alkaline earth metal cation and an ammonium cation ion. More preferably, each of R is selected from H or an inorganic cation selected from the group consisting of a sodium cation, a potassium cation, magnesium cation, and a calcium cation. More preferably, each of R is selected from H, a sodium cation, or a potassium cation. Even more preferably, R is H.

Preferably, each of n is an integer in the range from 1, or 2.

Preferably, each of R₁ is independently selected from the group consisting of hydrogen, C₁₋₄ alkyl, OR₄, N(R₄)₂, C(O)OR₄, and CON(R₄)₂, and wherein each of R₄, equal to or different from each other and at each occurrence, is independently selected from the group consisting of hydrogen, C₁₋₄ alkyl, hydroxyl protecting group, and amine protecting group.

More preferably, each of R₁ is independently selected from the group consisting of hydrogen, methyl, ethyl, propyl, isopropyl, OR₄, N(R₄)₂, C(O)OR₄, and CON(R₄)₂, and wherein each of R₄, equal to or different from each other and at each occurrence, is independently selected from the group consisting of hydrogen, methyl, ethyl, propyl, isopropyl, butyl, tert-butyl, isobutyl, hydroxyl protecting group, and amine protecting group. More preferably, each of R₁ is independently selected from the group consisting of hydrogen, methyl, ethyl, propyl, isopropyl, OR₄, N(R₄)₂, C(O)OR₄, and CON(R₄)₂, and wherein each of R₄, equal to or different from each other and at each occurrence, is independently selected from the group consisting of hydrogen, methyl, ethyl, propyl, isopropyl, butyl, *tert*-butyl, isobutyl, hydroxyl protecting group, and amine protecting group. More preferably, each of R₁ is independently selected from the group consisting of hydrogen, methyl, OR₄, and C(O)OR₄, and wherein each of R₄ is independently selected from hydrogen or methyl.

Preferably, each of R₂ is independently selected from the group consisting of hydrogen, C₁₋₄ alkyl, OR₄, N(R₄)₂, C(O)OR₄, and CON(R₄)₂, and wherein each of R₄, equal to or different from each other and at each occurrence, is independently selected from the group consisting of hydrogen, C₁₋₄ alkyl, hydroxyl protecting group, and amine protecting group. More preferably, each of R₂ is independently selected from the group consisting of hydrogen, methyl, ethyl, propyl, isopropyl, OR₄, N(R₄)₂, C(O)OR₄, and CON(R₄)₂, and wherein each of R₄, equal to or different from each other and at each occurrence, is independently selected from the group consisting of hydrogen, methyl, ethyl, propyl, isopropyl, butyl, *tert*-butyl, isobutyl, hydroxyl protecting group, and amine protecting group. More preferably, each of R₂ is independently selected from the group consisting of hydrogen, methyl, ethyl, propyl, isopropyl, OR₄, N(R₄)₂, C(O)OR₄, and CON(R₄)₂, and wherein each of R₄, equal to or different from each other and at each occurrence, is independently selected from the group consisting of hydrogen, methyl, ethyl, propyl, isopropyl, butyl, *tert*-butyl, isobutyl, hydroxyl protecting group, and amine protecting group. More preferably, each of R₂ is independently selected from the group consisting of hydrogen, methyl, OR₄, and C(O)OR₄, and wherein each of R₄ is independently selected from hydrogen or methyl.

Preferably, each of R₃ is independently selected from the group consisting of hydrogen, methyl, ethyl, propyl, isopropyl, butyl, *tert*-butyl, isobutyl, Si(R₅)₃, OR₅, N(R₅)₂, C(O)OR₅, and CON(R₅)₂, and wherein each of R₅, equal to or different from each other and at each occurrence, is independently selected from the group consisting of hydrogen, methyl, ethyl, propyl, isopropyl, butyl, *tert*-butyl, isobutyl, hydroxyl protecting group, and amine protecting group. More preferably, each of R₃ is independently selected from the group consisting of hydrogen, methyl, ethyl, Si(R₅)₃, OR₅, and N(R₅)₂, and wherein each of R₅, equal to or different from each other and at each occurrence, is independently selected from the group consisting of hydrogen, methyl, ethyl, propyl, isopropyl, butyl, *tert*-butyl, isobutyl, hydroxyl protecting group, and amine protecting group. More preferably, each of R₃ is independently selected from the group consisting of hydrogen, methyl, OR₅, and N(R₅)₂, and wherein each of R₅, equal to or different from each other and at each occurrence, is independently selected from hydrogen or methyl.

According to certain embodiments of the present invention, the compound (S) according to general formula (I_{S}) is a compound of formula (II_{S}) [compound (S) of class (I), herein after]: 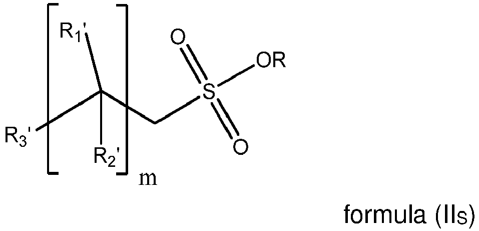 wherein:
- each of R is selected from H, sodium ion, potassium ion, magnesium ion, or calcium ion;
- each of m is an integer in the range from 0, 1, or 2;
- each of R₁' is independently selected from the group consisting of hydrogen, methyl, ethyl, propyl, and isopropyl.
- each of is independently selected from the group consisting of hydrogen, methyl, ethyl, propyl, and isopropyl; and
- each of R₃' is independently selected from the group consisting of hydrogen, C₁₋₄ alkyl, and Si(R₅')₃, and wherein each of R₅', independently from each other and at each occurrence, is C₁₋₄ alkyl.

Preferably, each of R is equal to H.

Preferably, each of R₁' is independently selected from the group consisting of hydrogen, methyl, and ethyl. More preferably, each of R₁' is independently selected from hydrogen or methyl. Most preferably, each of R₁' is hydrogen.

Preferably, each of R₂' is independently selected from the group consisting of hydrogen, methyl, and ethyl. More preferably, each of R₂' is independently selected from hydrogen or methyl. Most preferably, each of R₂' is hydrogen.

Preferably, each of R₃' is independently selected from the group consisting of hydrogen, methyl, ethyl, propyl, isopropyl, and Si(R₅')₃, and wherein each of R₅', equal to or different from each other and at each occurrence, is independently selected from the group consisting of methyl, ethyl, propyl, and isopropyl. More preferably, each of R₃' is independently selected from the group consisting of hydrogen, methyl, ethyl, and Si(R₅')₃, and wherein each of R₅', equal to or different from each other and at each occurrence, is methyl or ethyl. Even more preferably, each of R₃' is independently selected from the group consisting of hydrogen, methyl, and Si(R₅')₃, and wherein each of R₅' is methyl. Yet even more preferably, each of R₃' is independently selected from hydrogen or methyl. Most preferably, each of R₃' is hydrogen.

Preferred compounds of class (I) are selected from those of formula (II_{S}-a) to (II_{S}-e) herein below:

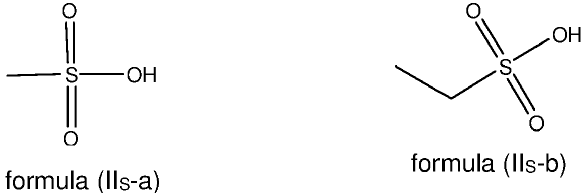

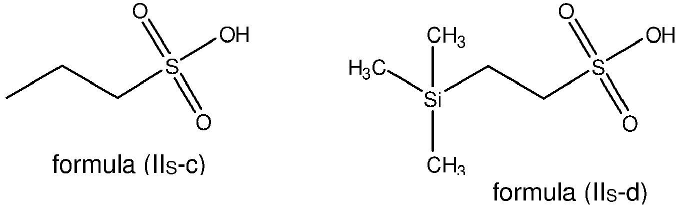

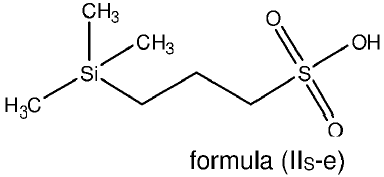

Most preferred compound of class (I) is the one of formula (II_{S}-a) herein below:

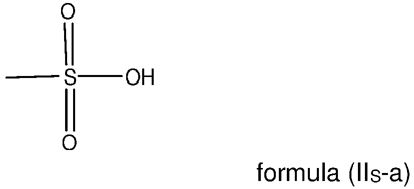

According to another embodiment of the present invention, the compound (S) according to general formula (I_{S}) is a compound of formula (III_{S}) [compound (S) of class (II), herein after]: 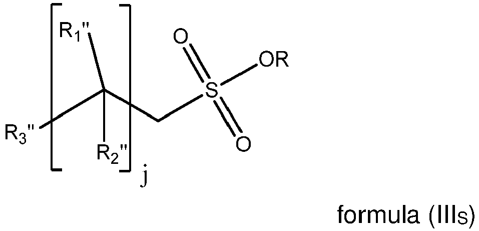 wherein:
- each of R is selected from H, sodium ion, potassium ion, magnesium ion or calcium ion;
- each of j is an integer in the range from 0, 1, or 2;
- each of R₁" is independently selected from the group consisting of hydrogen, C₁₋₄ alkyl, OR₄", N(R₄")₂, and C(O)OR₄", and wherein each of R₄", equal to or different from each other and at each occurrence, is independently selected from the group consisting of hydrogen, C₁₋₄ alkyl, hydroxyl protecting group, and amine protecting group;
- each of R₂" is independently selected from the group consisting of hydrogen, C₁₋₄ alkyl, OR₄", N(R₄")₂, and C(O)OR₄", and wherein each of R₄", equal to or different from each other and at each occurrence, is independently selected from the group consisting of hydrogen, C₁₋₄ alkyl, hydroxyl protecting group, and amine protecting group; and
- each of R₃" is independently selected from the group consisting of hydrogen, OR₅", N(R₅")₂, C(O)OR₅", and CON(R₅")₂. and wherein each of R₅", equal to or different from each other and at each occurrence, is independently selected from the group consisting of hydrogen, C₁₋₄ alkyl, hydroxyl protecting group, and amine protecting;

Preferably, each of R is H.

Preferably, each of R₁" is independently selected from the group consisting of hydrogen, methyl, ethyl, propyl, isopropyl, OR₄", and C(O)OR₄", and wherein each of R₄", equal to or different from each other and at each occurrence, is independently selected from the group consisting of hydrogen, methyl, ethyl, propyl, isopropyl, hydroxyl protecting group, and amine protecting group. More preferably, each of R₁" is independently selected from the group consisting of hydrogen, methyl, ethyl, OR₄", and C(O)OR₄", and wherein each of R₄", equal to or different from each other and at each occurrence, is independently selected from hydrogen, methyl, or ethyl. Even more preferably, each of R₁" is independently selected from the group consisting of hydrogen, methyl, OR₄", and C(O)OR₄", and wherein each of R₄", equal to or different from each other and at each occurrence, is independently selected from hydrogen, or methyl. Yet even more preferably, each of R₁" is independently selected from the group consisting of hydrogen, OR₄", and C(O)OR₄", and wherein each of R₄" is hydrogen. Most preferably, each of R₁" is hydrogen.

Preferably, each of R₂" is independently selected from the group consisting of hydrogen, methyl, ethyl, propyl, isopropyl, OR₄", and C(O)OR₄", and wherein each of R₄", equal to or different from each other and at each occurrence, is independently selected from the group consisting of hydrogen, methyl, ethyl, propyl, isopropyl, hydroxyl protecting group, and amine protecting group. More preferably, each of R₂" is independently selected from the group consisting of hydrogen, methyl, ethyl, OR₄", and C(O)OR₄", and wherein each of R₄", equal to or different from each other and at each occurrence, is independently selected from hydrogen, methyl, or ethyl. Even more preferably, each of R₂" is independently selected from the group consisting of hydrogen, methyl, OR₄", and C(O)OR₄", and wherein each of R₄", equal to or different from each other and at each occurrence, is independently selected from hydrogen, or methyl. Yet even more preferably, each of R₂" is independently selected from the group consisting of hydrogen, OR₄", and C(O)OR₄", and wherein each of R₄" is hydrogen. Most preferably, each of R₂" is hydrogen.

Preferably, each of R₃" is independently selected from the group consisting of hydrogen, OR₅", SR₅", and N(R₅")₂, and wherein each of R₅", equal to or different from each other and at each occurrence, is independently selected from the group consisting of hydrogen, methyl, ethyl, propyl, isopropyl, hydroxyl protecting group, and amine protecting group. More preferably, each of R₃" is independently selected from the group consisting of hydrogen, OR₅", and N(R₅")₂, and wherein each of R₅", equal to or different from each other and at each occurrence, is independently selected from the group consisting of hydrogen, methyl, and ethyl. Even more preferably, each of R₃" is independently selected from the group consisting of OR₅", and N(R₅")₂, and wherein each of R₅", equal to or different from each other and at each occurrence, is independently selected from hydrogen, or methyl. Yet even more preferably, each of R₃" is independently selected from OR₅" or N(R₅")₂, and wherein each of R₅" is hydrogen. Most preferably, each of R₃" is N(R₅")₂, and wherein each of R₅" is hydrogen.

Preferred compounds of class (II) are selected from those of formula (IIIs-c) to (IIIs-j) herein below:

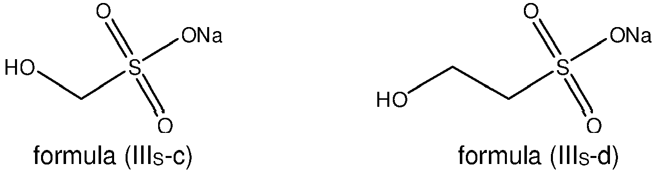

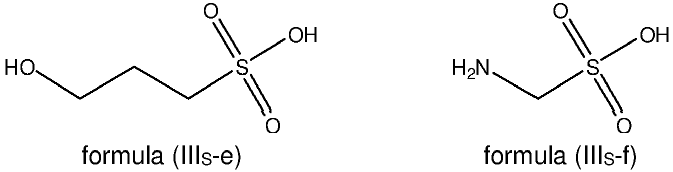

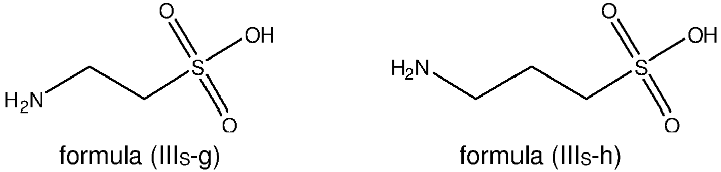

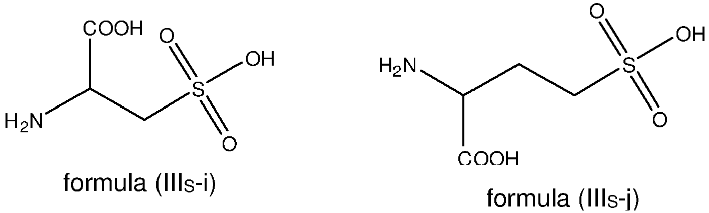

Most preferred compound of class (II) is the one of formula (III_{S}-g) herein below:

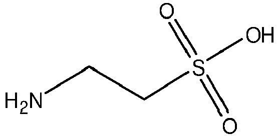

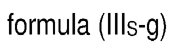

Compound (S) according to general formula (I_{S}) of the present invention may be commercially available or may be chemically synthesized. Said synthesis of compound (S) according to general formula (I_{S}) may be carried out using conventional methods known to the skilled in the art.

It is further understood that all definitions and preferences as described for compound (S) of general formula (I_{S}) above equally apply for this embodiment and all further embodiments, as described below.

Advantageously, the amount of the compound (S) according to general formula (I_{S}), as detailed above, relative to the total weight of the composition (C), is equal to or greater than 1.0 wt. %, preferably equal to or greater than 2.0 wt. %, preferably equal to or greater than 3.0 wt. %, more preferably equal to or greater than 3.5 wt. %, more preferably equal to or greater than 4.0 wt. %, more preferably equal to or greater than 4.5 wt. %.

It is further understood that the amount of the compound (S) according to general formula (Is), as detailed above, relative to the total weight of the composition (C), is advantageously equal to or less than 27.0 wt. %, preferably equal to or less than 22.0 wt. %, more preferably equal to or less than 19.0 wt. %, more preferably equal to or less than 17.0 wt. %, more preferably equal to or less than 14.0 wt. %, more preferably equal to or less than 12.0 wt. %.

In a preferred embodiment of the composition (C) of the present invention, the compound (S) according to general formula (I_{S}), as detailed above, relative to the total weight of the composition (C), is present in an amount from 1.0 to 27.0 wt. %, preferably in an amount from 2.0 to 22.0 wt. %, preferably in an amount from 3.00 to 19.00 wt. %, preferably in an amount from 3.5 to 17.0 wt. %, more preferably in an amount from 4.0 to 14.0 wt. %, and more preferably in an amount from 4.5 to 12.0 wt. %.

As said above, the composition (C) is having a total calcium (Ca) content from 0.5 to 32.0 wt. %, as expressed in wt. % of CaO, relative to the total weight of the composition (C).

Advantageously, the total Ca content, as expressed in wt. % of CaO, relative to the total weight of the composition (C), is equal to or greater than 1.0 wt. %, preferably equal to or greater than 1.3 wt. %, preferably equal to or greater than 1.6 wt. %, preferably equal to or greater than 1.8 wt. %, preferably equal to or greater than 2.0 wt. %.

It is further understood that the total Ca content, as expressed in wt. % of CaO, relative to the total weight of the composition (C), is advantageously equal to or less than 26.0 wt. %, preferably equal to or less than 20.0 wt. %, preferably equal to or less than 14.0 wt. %, preferably equal to or less than 10.0 wt. %, preferably equal to or less than 8.0 wt. %.

In a preferred embodiment of the composition (C) of the present invention, the total Ca content, as expressed in wt. % of CaO, ranges from 1.0 to 26.0 wt. %, preferably from 1.3 to 20.0 wt. %, preferably from 1.6 to 14.0 wt. %, preferably from 1.8 to 10.0 wt. %, preferably from 2.0 to 8.0 wt. %, relative to the total weight of the composition (C).

As said above, the composition (C) is having a total phosphorus (P) content from 3.0 to 65.0 wt. %, as expressed in wt. % of P₂O₅, relative to the total weight of the composition (C).

Advantageously, the total P content, as expressed in wt. % of P₂O₅, relative to the total weight of the composition (C), is equal to or greater than 3.5 wt. %, preferably equal to or greater than 4.0 wt. %, preferably equal to or greater than 4.5 wt. %, preferably equal to or greater than 4.8 wt. %, preferably equal to or greater than 5.0 wt. %.

It is further understood that the total P content, as expressed in wt. % of P₂O₅, relative to the total weight of the composition (C), is advantageously equal to or less than 58.0 wt. %, preferably equal to or less than 50.0 wt. %, preferably equal to or less than 44.0 wt. %, preferably equal to or less than 40.0 wt. %, preferably equal to or less than 38.0 wt. %.

In a preferred embodiment of the composition (C) of the present invention, the total P content, as expressed in wt. % of P₂O₅, relative to the total weight of the composition (C), ranges from 3.5 to 58.0 wt. %, preferably from 4.0 to 50.0 wt. %, preferably from 4.5 to 44.0 wt. %, preferably from 4.8 to 40.0 wt. %, preferably from 5.0 to 38.0 wt. %.

It goes without saying that the elements Ca and P are present in the form of the at least one phosphorus (P) and calcium (Ca) water-soluble fertilizing nutrient.

Within the context of the present invention, the expression "at least one phosphorus (P) and calcium (Ca) water-soluble fertilizing nutrient", may refer to one or more water-soluble fertilizing nutrients containing both Ca and P in one single water-soluble fertilizing nutrient [herein after Ca-P water-soluble fertilizing nutrient] or may refer to one or more than one water-soluble fertilizing nutrient containing only Ca [herein after Ca water-soluble fertilizing nutrient] or containing only P [herein after P water-soluble fertilizing nutrient]. Mixtures of Ca-P water-soluble fertilizing nutrients, Ca water-soluble fertilizing nutrients and P water-soluble fertilizing nutrients can also be used for the purpose of the invention. In the remainder of the text, the expression "Ca-P water-soluble fertilizing nutrient" is understood, for the purposes of the present invention, both in the plural and the singular form. The same applies for the expressions "Ca water-soluble fertilizing nutrient" and "P water-soluble fertilizing nutrient".

Said Ca-P water-soluble fertilizing nutrients, Ca water-soluble fertilizing nutrients and P water-soluble fertilizing nutrients, respectively are known to those skilled in the art for use in fertilizer compositions.

Non-limiting examples of Ca water-soluble fertilizing nutrients notably include inorganic calcium salts such as calcium nitrate, calcium chloride, calcium hydroxide, calcium iodate, calcium silicate, calcium cyanamide, nitrolime, calcium carbonate, calcium ammonium nitrate (CAN), or hydrates thereof; and organic calcium salts such as calcium acetate, calcium citrate, calcium gluconate, calcium lactate, calcium ligosulphonate, or hydrates thereof.

Preferred Ca water-soluble fertilizing nutrients are inorganic calcium salts chosen among calcium nitrate or calcium carbonate, or hydrates thereof.

Non-limiting examples of P water-soluble fertilizing nutrients notably include phosphorus-based acids such as phosphoric acid, phosphorous acid, hypophosphorous acid, and phosphorus salts such as, superphosphate, concentrated superphosphate (CSP), ammoniated superphosphate, ammonium phosphate, monoammonium phosphate (MAP), diammonium phosphate (DAP), triammonium phosphate (TAP), ammonium polyphosphate (APP), nitrophosphate, nitric phosphate, potassium phosphate, monopotassium phosphate (MKP), dipotassium phosphate (DKP), tripotassium phosphate (TKP), and hydrates thereof.

Preferred P water-soluble fertilizing nutrients are chosen among phosphoric acid, monopotassium phosphate (MKP), monoammonium phosphate (MAP), or hydrates thereof.

Non-limiting examples of Ca-P water-soluble fertilizing nutrient notably include dicalcium phosphate (DCP), hydroxyapatite, tricalcium phosphate (TCP), monocalcium phosphate (MCP), and hydrates thereof.

As to the amount of the Ca-P water-soluble fertilizing nutrients, Ca water-soluble fertilizing nutrients and P water-soluble fertilizing nutrients in the composition (C) of the present invention, it is understood that depending on the nature of said Ca-P water-soluble fertilizing nutrients, Ca water-soluble fertilizing nutrients and P water-soluble fertilizing nutrients, the skilled in art can determine according to standard practice in the art, their suitable amounts in order to arrive to the a total Ca content and the total P content, as detailed above.

The inventors have surprisingly found that due to presence of the compound (S) of general formula (I_{S}), as detailed above, the amount of water can be kept low without the risk of precipitation of insoluble salts in said composition (C).

Therefore, the amount of water, relative to the total weight of the composition (C), is advantageously equal to or less than 19.0 wt. %, preferably equal to or less than 18.0 wt. %, preferably equal to or less than 17.0 wt. %.

On the other side, a minimum amount of water is necessary to keep the composition (C) in a liquid form.

Advantageously, the amount of water, relative to the total weight of the composition (C), is equal to or greater than 2.0 wt. %, preferably equal to or greater than 3.0 wt. %, preferably equal to or greater than 3.5 wt. %.

In a preferred embodiment of the composition (C) of the present invention, the amount of water, relative to the total weight of the composition (C), is ranging from 2.0 to 19.0 wt. %, preferably from 3.0 to 18.0 wt. %, preferably from 3.5 to 17.0 wt. %.

If desired, the water can be partly replaced by at least one organic solvent as long as the final properties of the composition (C) will not change.

Non-limiting examples of organic solvents notably include dihydrolevoglucosenone, methyl 5-(dimethylamino)-2-methyl-5-oxopentanoate and 1-butylpyrrolidin-2-one.

Depending on the final end use of the composition (C), as detailed above, as fertilizer to provide plant nutrition for growing plants, the composition (C) may further comprise other water-soluble fertilizing nutrients chosen among nitrogen (N) water-soluble fertilizing nutrients, potassium (K) water-soluble fertilizing nutrients or magnesium (Mg) water-soluble fertilizing nutrients which are different to the Ca-P water-soluble fertilizing nutrients, Ca water-soluble fertilizing nutrients and P water-soluble fertilizing nutrients, as detailed above.

Non-limiting examples of nitrogen (N) water-soluble fertilizing nutrients notably include ammoniacal nitrogen compounds such as urea, monomethylol urea, methylene urea, urea-triazone, isobutylidene diurea, sulphur coated urea, polymer coated urea; ammonium salts such as ammonium sulphate, ammonium nitrate-sulphate, ammonium nitrate; nitrate nitrogen compounds such as sodium nitrate, ammonium nitrate, ammonium nitrate-sulphate; and hydrates thereof.

Non-limiting examples of potassium (K) water-soluble fertilizing nutrients notably include inorganic potassium salts such as potassium oxide, muriate of potash, potassium sulphate, potassium hydroxide, potassium nitrate, potassium carbonate, potassium bicarbonate, potassium magnesium sulphate; organic potassium salts such as potassium acetate, potassium citrate, potassium gluconate, potassium lactate, potassium ligosulphonate; and hydrates thereof.

Non-limiting examples of magnesium (Mg) water-soluble fertilizing nutrients notably include inorganic magnesium salts such as magnesium sulphate, magnesium nitrate, sulphate of potash magnesia, magnesium oxide, magnesium carbonate, kieserite, magnesium chloride; organic magnesium salts such as magnesium acetate, magnesium citrate, magnesium gluconate, magnesium lactate, magnesium ligosulphonate; and hydrates thereof.

Depending on the final end use of the composition (C), as detailed above, as fertilizer to provide plant nutrition for growing plants, the skilled in the art will choose a suitable combination of the different water-soluble fertilizing nutrients, as detailed above, and suitable amounts thereof according to the standard and general practice known by said skilled person in the art.

According to certain embodiments of the present invention, the composition (C) has further a total nitrogen (N) content as expressed in wt. % of elemental N, relative to the total weight of the composition (C), equal to or greater than 2.5 wt. %, preferably equal to or greater than 4.0 wt. %, preferably equal to or greater than 5.5 wt. %, preferably equal to or greater than 6.5 wt. %, preferably equal to or greater than 7.0 wt. %.

It is further understood that the total nitrogen (N) content as expressed in wt. % of elemental N, relative to the total weight of the composition (C), is advantageously equal to or less than 35.0 wt. %, preferably equal to or less than 30.0 wt. %, preferably equal to or less than 27.0 wt. %, preferably equal to or less than 24.0 wt. %, preferably equal to or less than 22.0 wt. %.

In a preferred embodiment of the present invention, the composition (C) has a total nitrogen (N) content from 2.5 to 35.0 wt. %, as expressed in wt. % of elemental N, preferably from 4.0 to 30.0 wt. %, preferably from 5.5 to 27.0, preferably from 6.5 to 24.0 wt. %, preferably from 7.0 to 22.0 wt. %, relative to the total weight of the composition (C).

According to certain embodiments of the present invention, the composition (C) has further a total potassium (K) content, as expressed in wt. % of K₂O, relative to the total weight of the composition (C), equal to or greater than 2.0 wt. %, preferably equal to or greater than 2.2 wt. %, preferably equal to or greater than 2.4 wt. %, preferably equal to or greater than 2.6 wt. %, preferably equal to or greater than 2.8 wt. %, preferably equal to or greater than 3.0 wt. %.

It is further understood that the total potassium (K) content as expressed in wt. % of K₂O, relative to the total weight of the composition (C), is equal to or less than 60.0 wt. %, preferably equal to or less than 50.0 wt. %, preferably equal to or less than 45.0 wt. %, preferably equal to or less than 40.0 wt. %, preferably equal to or less than 35.0 wt. %, preferably equal to or less than 30.0 wt. %.

In a preferred embodiment of the present invention, the composition (C) has a total potassium (K) content from 2.0 to 60.0 wt. %, as expressed in wt. % of K₂O, preferably from 2.2 to 50.0 wt. %, preferably from 2.4 to 45.0 wt. %, preferably from 2.6 to 40.0 wt. %, preferably from 2.8 to 35.0 wt. %, preferably from 3.0 to 30.0 wt. %, relative to the total weight of the composition (C).

According to certain embodiments of the present invention, the composition (C) has further a total magnesium (Mg) content as expressed in wt. % of MgO, relative to the total weight of the composition (C), equal to or greater than 0.5 wt. %, preferably equal to or greater than 1.0 wt. %, preferably equal to or greater than 1.5 wt. %, preferably equal to or greater than 1.8 wt. %, preferably equal to or greater than 2.0 wt. %.

It is further understood that the total magnesium (Mg) content as expressed in wt. % of MgO, relative to the total weight of the composition (C), is advantageously equal to or less than 9.0 wt. %, preferably equal to or less than 8.5 wt. %, preferably equal to or less than 8.0 wt. %, preferably equal to or less than 7.5 wt. %, preferably equal to or less than 7.0 wt. %.

In a preferred embodiment of the present invention, the composition (C) has a total magnesium (Mg) content from 0.5 to 9.0 wt. %, as expressed in wt. % of MgO, preferably from 1.0 to 8.5 wt. %, preferably from 1.5 to 8.0 wt. %, preferably from 1.8 to 7.5 wt. %, preferably from 2.0 to 7.0 wt. %, relative to the total weight of the composition (C).

Within the context of the present invention, the elements phosphorus (P), calcium (Ca), and when present, the elements potassium (K), nitrogen (N), magnesium (Mg) may be present in five separate water-soluble fertilizing nutrients or less than five water-soluble fertilizing nutrients where more than one of the phosphorus (P), calcium (Ca), and when present potassium (K), nitrogen (N), or magnesium (Mg) are contained in a single water-soluble fertilizing nutrient. By way of example, magnesium nitrate comprises the elements magnesium (Mg) and nitrogen (N).

Within the context of the present invention, the element sulphur (S) is substantially present in the compound (S) of general formula (Is), as detailed above.

If desired, the composition (C) may further comprise at least one additional sulphur (S) water-soluble fertilizing nutrient different to the compound (S) of general formula (Is), as detailed above, in an amount of less than 0.1 wt. %, relative to the total weight of the composition (C), preferably less than 0.05 wt. %.

Non-limiting examples of additional sulphur (S) water-soluble fertilizing nutrients different to the compound (S) of general formula (I_{S}), as detailed above, notably include iron(II) sulphate, iron(III) sulphate, zinc(II) sulphate, copper(I) sulphate, copper(II) sulphate, manganese(II) sulphate, and hydrates thereof.

According to certain embodiments of the present invention, the composition (C) has a total sulphur (S) content as expressed in wt. % of SOs, relative to the total weight of the composition (C), equal to or greater than 0.5 wt. %, preferably equal to or greater than 1.0 wt. %, preferably equal to or greater than 1.5 wt. %, preferably equal to or greater than 2.0 wt. %, preferably equal to or greater than 2.5 wt. %, preferably equal to or greater than 3.0 wt. %.

It is further understood that the total sulphur (S) content as expressed in wt. % of SOs, relative to the total weight of the composition (C), is advantageously equal to or less than 26.0 wt. %, preferably equal to or less than 21.0 wt. %, preferably equal to or less than 17.0 wt. %, preferably equal to or less than 13.0 wt. %, preferably equal to or less than 10.0 wt. %, preferably equal to or less than 8.5 wt. %.

In a preferred embodiment of the present invention, the composition (C) has a total sulphur (S) content from 0.5 to 26.0 wt. %, as expressed in wt. % of SOs, preferably from 1.0 to 21.0 wt. %, preferably from 1.5 to 17.0 wt. %, preferably from 2.0 to 13.0 wt. %, preferably from 2.5 to 10.0 wt. %, preferably from 3.0 to 8.5 wt. %, relative to the total weight of the composition (C).

The inventors have further found that the compound (S) according to general formula (I_{S}) present in an amount from 0.5 to 32.0 wt. %, relative to the total weight of the composition (C), still prevents precipitation of the constituting ions, i.e. without any formation of insoluble salts, when present in a composition (C) in which Ca water-soluble fertilizing nutrients, P water-soluble fertilizing nutrients, nitrogen (N) water-soluble fertilizing nutrients, potassium (K) water-soluble fertilizing nutrients and magnesium (Mg) water-soluble fertilizing nutrients are combined at high concentrations as demonstrated in the experiments below.

Alternatively, the total sulphur (S) content, the total phosphorus (P) content, the total calcium (Ca) content, the total nitrogen (N) content, the total potassium (K) content, the total magnesium (Mg) content comprised in the composition (C) of the present invention can also be presented in terms of a N:P:K:Ca:Mg:S grade, wherein N is total nitrogen (N) content as expressed in wt. % of elemental N, P is total phosphorus (P) content as expressed in wt. % of P₂O₅, K is total potassium (K) content as expressed in wt. % of K₂O, Ca is total calcium (Ca) content as expressed in wt. % of CaO, Mg is total magnesium (Mg) content as expressed in wt. % of MgO, and S is total sulphur (S) content as expressed in wt. % of SOs, all wt. % relative to the total weight of composition (C).

As used herein, N:P:K:Ca:Mg:S grades are measured as they are typically measured in the fertilizer industry. By way of example, a composition (C) having a NPKCaMgS grade of 32.0:16.0:12.0:8.0:6.0:4.0 refers to a composition (C) having a total nitrogen (N) content in an amount corresponding to an amount of 32.0 wt. % of elemental N, a total phosphorus (P) content in an amount corresponding to an amount of 16.0 wt. % of P₂O₅, a total potassium (K) in an amount corresponding to an amount of 12.0 wt. % of K₂O, a total calcium (Ca) content in an amount corresponding to an amount of 8.0 wt. % of CaO, a total magnesium (Mg) content in an amount corresponding to an amount of 6.0 wt. % of MgO, and a total sulphur (S) content in an amount corresponding to an amount of 4.0 wt. % of SOs, all wt. % relative to the total weight of composition (C).

For the purpose of the present invention, the term "N:P:K:Ca:Mg:S grades" will also be used in the absence of one or more of the elements N, K or Mg. In this case, the composition (C) may have a NPKCaMgS grade of 0.0:60.0:0.0:13.0:0.0:14.0 refers to a composition (C) having only a total phosphorus (P) content in an amount corresponding to an amount of 60.0 wt. % of P₂O₅, a total calcium (Ca) content in an amount corresponding to an amount of 13.0 wt. % of CaO, and a total sulphur (S) content in an amount corresponding to an amount of 14.0 wt. % of SOs, all wt. % relative to the total weight of composition (C). In that case, the elements N, K and Mg are not present.

The inventors have further found that when the composition (C) of the present invention further comprises at least one gelling agent, that the composition (C) can form a gel having further improved properties, in particular an improved plant uptake of the different nutrients comprised in the composition (C), further improved compatibility between the different nutrients, allowing certain nutrient combinations to be realized without any settling of the constituting particles and particulates in said composition (C).

In general, gels are defined as a liquid system, yet they behave like solids due to the three-dimensional crosslinked network within the liquid and which exhibits no flow when in the steady state.

Within the context of the present invention, the expression "at least one gelling agent" is intended to denote one or more than one gelling agent. Mixtures of gelling agents can also be used for the purpose of the invention. In the remainder of the text, the expression "gelling agent is understood, for the purposes of the present invention, both in the plural and the singular form.

Said gelling agents are known to those skilled in the art of fertilizer compositions. Non-limiting examples of gelling agents notably include gum Arabic, alginic acid, alginates, xanthan gum, guar gum, tragacanth gum, methyl cellulose, cellulose ethers, cellulose acetate, ethyl cellulose, hydroxyethyl cellulose, hydroxyethyl methyl cellulose, starch, gelatine, carrageenan, locust bean gum, pectin, succinoglycans, and pullulan.

In general, a gel can be characterized by its high viscosity.

According to certain embodiments of the present invention, the composition (C), as detailed above, has a viscosity equal to or less than 100000 mPa·s at 20 °C, preferably equal to or less than 90000 mPa·s, preferably equal to or less than 80000 mPa·s, preferably equal to or less than 70000 mPa·s, preferably equal to or less than 60000 mPa·s, preferably equal to or less than 50000 mPa·s.

It is further understood that the composition (C), as detailed above, has advantageously a viscosity equal to or greater than 2000 mPa·s at 20 °C, preferably equal to or greater than 2100 mPa·s, preferably equal to or greater than 2200 mPa·s, preferably equal to or greater than 2300 mPa·s, preferably equal to or greater than 2400 mPa·s, preferably equal to or greater than 2500 mPa·s.

According to the present invention, the viscosity of the composition (C), as detailed above, is measured by using a Thermo Scientific^{™} HAAKE^{™} Viscotester^{™} iQ (VTiQ) with integrated Peltier Temperature Control and Parallel Plate PP60mm, as detailed in the experimental section below.

As to the amount of gelling agent, it is understood that the skilled person in the art will practise said gelling agent in a suitable amount in such a manner that the composition (C), as detailed above, becomes a gel having the desired viscosity, as detailed above.

According to certain embodiments of the present invention, the composition (C) comprises the gelling agent in an amount equal to or greater than 0.05 wt., relative to the total weight of the composition (C), preferably equal to or greater than 0.06 wt. %, preferably equal to or greater than 0.07 wt. %, preferably equal to or greater than 0.08 wt. %, preferably equal to or greater than 0.09 wt. %, preferably equal to or greater than 0.10 wt. %.

It is further understood that the amount of the gelling agent, relative to the total weight of the composition (C), is advantageously equal to or less than 5.00 wt. %, preferably equal to or less than 4.00 wt. %, preferably equal to or less than 3.00 wt. %, preferably equal to or less than 2.00 wt. %, preferably equal to or less than 1.50 wt. %, preferably equal to or less than 1.00 wt. %.

In a preferred embodiment of the present invention, the composition (C) comprises the gelling agent in an amount from 0.05 to 5.00 wt. %, preferably from 0.06 to 4.00 wt. %, preferably from 0.07 to 3.00 wt. %, preferably from 0.08 to 2.00 wt. %, preferably from 0.09 to 1.50 wt. %, preferably from 0.10 to 1.00 wt. %, relative to the total weight of the composition (C).

According to certain embodiments of the present invention, the composition (C), as detailed above, may further comprise at least one other additional ingredient [ingredient (I_{C}), herein after] to enhance the appearance, storage, transport, handling and/or performance of the composition (C).

Within the context of the present invention, the expression "at least one other additional ingredients [ingredient (I_{C}), herein after]" is intended to denote one or more than one ingredient (I_{C}). Mixtures of ingredients (I_{C}) can also be used for the purpose of the invention. In the remainder of the text, the expression "ingredient (I_{C}) is understood, for the purposes of the present invention, both in the plural and the singular form.

Said ingredients (I_{C}) are known to those skilled in the art of fertilizer compositions. Non-limiting examples of ingredients (I_{C}) notably include: micronutrients, surfactants, humectants, dispersing agents, suspending agents and similar ingredients to enhance the shelf life of the product, adhesion promotors, antioxidants, antifoaming agents, ultraviolet light stabilizers, antimicrobial agents, penetration accelerators, crystal growth inhibitors, soil remediation agents, colorants, pigments, fragrances, solvents, any material that facilitates the application of composition (C) such as spreading or sticking agents, antifreezes, evaporation inhibitors, anti-caking agents, and any other materials customarily employed in formulating fertilizer compositions such as pesticides, herbicides, insecticides, weedicides, miticides, fungicides, acaricides, nematicides, bactericides, rodenticides, growth-regulating agents, urease inhibitors, nitrification inhibitors, and the like.

As non-limiting examples, suitable micronutrient sources include boron (B), iron (Fe), molybdenum (Mo), manganese (Mn), copper (Cu), zinc (Zn), and the like and mixtures thereof, as well as chelates of micronutrient sources such as ethylenediamine tetraacetic acid (EDTA), diethylenetriamine pentaacetic acid (DTPA), ethylenediamine-*N,N*'-bis(2-hydroxyphenylacetate) (EDDHA), NTA (nitrilo triacetic Acid), HEDTA (hydroxyethyl ethylene diamine triacetic acid), TTHA (triethylene tetraamine hexaacetic acid), PDTA (1,3-propanediamine tetraacetic acid), lysine and its derivatives, glycine and its derivatives, and the like.

As to the amount of the ingredients (I_{C}), it is understood that the skilled person in the art will practise said additional ingredients (I_{C}) in a suitable amount according to standard and general practice known by said skilled person in the art.

Typically, the amount of the ingredients (I_{C}), when present, is from 0.05 wt. % to 20.00 wt. %, or from 0.10 wt. % to 15.00 wt. %, or from 0.10 wt. % to 10.00 wt. %, or from 0.10 wt. % to 5.00 wt. %, relative to the total weight of the composition (C).

### METHODS TO MANUFACTURE COMPOSITION (C)

The method for the manufacturing of the composition (C), according to the present invention, comprises intimate admixing:
- from 1.0 to 20.0 wt. % of water;
- from 0.5 to 32.0 wt. % of the at least one compound (S) as defined above;
- at least one phosphorus (P) and calcium (Ca) water-soluble fertilizing nutrient in such an amount that the composition (C) has a total calcium (Ca) content from 0.5 to 32.0 wt. %, as expressed in wt. % of CaO, and a total phosphorus (P) content from 3.0 to 65.0 wt. %, as expressed in wt. % of P₂O₅;
- optionally at least one nitrogen (N) water-soluble fertilizing nutrient in such an amount that the composition (C) has a total nitrogen (N) content from 2.5 to 35.0 wt. %, as expressed in wt. % of elemental N;
- optionally at least one potassium (K) water-soluble fertilizing nutrient in such an amount that the composition (C) has a total potassium (K) content from 2.0 to 60.0 wt. %, as expressed in wt. % of K₂O;
- optionally at least one magnesium (Mg) water-soluble fertilizing nutrient in such an amount that the composition (C) has a total magnesium (Mg) content from 0.5 to 9.0 wt. %, as expressed in wt. % of MgO;
- optionally from 0.05 to 5.00 wt. % of at least one gelling agent; and
- optionally at least one additional ingredient (I_{C})
wherein all wt. % are relative to the total weight of the composition (C).

Typically said intimate admixing, as detailed above, may be carried out by using traditional mixers and blenders, high intensity mixers and electric stirrers.

It is understood that the skilled person in the art will carry out said intimate admixing according to general practice such as notably using optimal times, speeds, weights, volumes and batch quantities.

It is a further object of the present invention to provide a formulation [formulation (F), herein after] comprising the composition (C), as defined above, whereby the formulation (F) is obtained by diluting said composition (C) with a diluent [diluent (dil), herein after].

It is further understood that all definitions and preferences as described above equally apply for this embodiment and all further embodiments, as described below.

Among diluents (dil) suitable for use in the present invention mention may be notably made of water and water-based solutions. Preferably, the diluent (dil) suitable for use in the present invention is water.

For the purpose of the present inventions the term "water-based solutions" is intended to refer to solutions comprising water and at least one component selected from the group of biostimulants, herbicides, pesticides, insecticides, miticides, acaricides, nematicides, fungicides, bactericides, rodenticides and growth-regulating agents.

As to the dilution factor of the composition (C), as detailed above, which is to be applied in order to obtain the formulation (F) according to the present invention, it is understood that the skilled person in the art will practise said dilution in order to comply with the suitable amounts of the water-soluble fertilizing nutrients, as detailed above.

Within the context of the present invention, the dilution factor refers to the ratio of the weight of the initial composition (C), as detailed above, to the diluent (dil), as detailed above.

Generally, the lower limit of the dilution factor of the composition (C), as detailed above, applied in order to obtain the formulation (F), as detailed above, will be determined according to the standard and general practice known by the skilled person in the art.

The upper limit of the dilution factor of the composition (C), as detailed above, applied in order to obtain the formulation (F), as detailed above, will be adapted to avoid washing out or leaching of the water-soluble fertilizing nutrients comprised in said composition (C) when it is supplied.

According to some embodiments of the present invention, the dilution factor of the composition (C), as detailed above, applied in order to obtain the formulation (F), as detailed above, will be equal to or at least 1 : 5, or equal to or at least 1 : 10, or equal to or at least 1 : 20, or equal to or at least 1 : 30, or equal to or at least 1 : 40, or equal to or at least 1 : 45.

Advantageously, the composition (C), as detailed above, has a specific pH in order to increase soil nutrient availability and to enhance nutrient uptake efficiency of composition (C), especially in alkaline and saline soils, further to neutralize and dissolve bicarbonates in composition (C), to prevent or avoid the formation of precipitates in composition (C) that might block or clog irrigation systems, emitters, pipes and drippers, to keep irrigation systems clean resulting in a longer lifespan of said systems, and to enhance the effect of pesticides comprised in composition (C).

Within the context of the present invention, the pH of said composition (C) is measured by first diluting said composition (C) with water until a 10 wt. % solution is formed. The further details on the pH measurements by using a Hanna Instruments HI 9126 pH meter, are described in detail in the experimental section below.

Generally, the composition (C), as detailed above, is characterized by having a pH, as measured according to the method as described above, from 1.00 to 3.00, preferably from 1.20 to 2.90, preferably from 1.40 to 2.80, preferably from 1.50 to 2.70.

According to certain embodiments of the present invention, the additional ingredients (I_{C}), as detailed above, may also be added to the formulation (F) or alternatively only be added to the formulation (F) in order to enhance the appearance, storage, transport, handling and/or performance of the formulation (F).

In the present invention, the inventors have now surprisingly found that the formulation (F), as detailed above, is a homogeneous solution without any precipitation of the constituting ions, i.e. without any formation of insoluble salts, in said formulation (F).

### USE OF THE COMPOSITION (C) AND THE FORMULATION (F)

Either of the composition (C), as detailed above, or the formulation (F), as detailed above, can be used for fertilization purposes to provide plant nutrition for growing plants.

Said uses are also an aspect of the present invention.

It is further understood that all definitions and preferences, as described above, equally apply for all further embodiments, as described below.

The use of the composition (C), as detailed above, or the formulation (F), as detailed above, comprises supplying composition (C) or said formulation (F) to at least part of a plant or a seed which grows or will be grown. As a general rule, such growth occurs on a substrate, such as soil (for example in a pot, in borders, in the field or in agricultural fields) or artificial media. The terms "grows", "grown" and "growing" as used herein include all physiological processes leading to an increase in cell size and/or cell number as well as those leading to cellular differentiation.

The composition (C), as detailed above, or the formulation (F), as detailed above, may be applied to a broad area to provide plant nutrition for growing plants in any suitable usual manner according to standard practice known by the skilled in the art taking into account factors such as temperature and weather conditions.

Among the suitable manners for supplying composition (C), as detailed above, or the formulation (F), as detailed above, mention can notably be made of spraying, atomizing, vaporizing, drenching, watering, squirting, sprinkling, pouring, fumigating, injecting, painting, seed treating, coating, immersing, soaking and the like by using conventional equipment such as a handpump, a backpack sprayer, a boomsprayer, and the like. Desirably, the composition (C) or the formulation (F), as detailed above, are supplied by spraying and drenching.

The skilled in the art will apply the composition (C), as detailed above, or the formulation (F), as detailed above, in a dosage sufficient to effect the desired action. This dosage is dependent upon many factors, including the method and conditions of the application.

In the present invention, the inventors have now surprisingly found that the use of the composition (C), as detailed above, or the formulation (F), as detailed above, for fertilization purposes to provide plant nutrition for growing plants is associated with only minor handling costs, improved ergonomics and the reduction of overall handling costs.

### EXAMPLES

The invention will be now described in more details with reference to the following examples, whose purpose is merely illustrative and not intended to limit the scope of the invention.

### Test methods

### Viscosity measurements:

The viscosity measurements were carried out by using a Thermo Scientific^{™} HAAKE^{™} Viscotester^{™} iQ (VTiQ) with integrated Peltier Temperature Control and Parallel Plate PP60mm.

The gap was set at 2 millimeter to prevent the particles present in the real samples from interfering the measurements. 5.8 mL of sample was placed on the PP60 lower plate, and the PP60mm upper plate was carefully lowered onto the sample. Sample excesses were trimmed. The temperature was set at 15 °C and the sample was allowed during 2 minutes to adapt to 15 °C. As the VTiQ is equipped with a Peltier Temperature Module, it was possible to map the behavior of samples over defined temperature ranges. A constant shear rate of 20 s⁻¹ has been applied to the samples, while the temperature was programmed to go from 15 °C up to 45 °C. This means that the rotor started turning in the sample at a speed of 20 s⁻¹. The sample resisted this turning of the rotor, thus a certain amount of torque needed to be produced by the VTiQ in order to turn the rotor. A temperature curve from 15 °C to 45 °C has been plotted. Along the complete curve, the VTiQ calculated the viscosity at each temperature from the shear rate and the torque. The viscosity at a constant shear rate of 20 s⁻¹ has been plotted as a function of temperature.

Based on the plotted temperature curve from 15 °C to 45 °C, the calculated viscosity at 20 °C was taken as the point of comparison. Additionally, the various plotted temperature curves from 15 °C to 45 °C were superimposed in order to compare the calculated viscosities as a function of the temperature.

### pH measurements:

The pH measurements were carried out by using a Hanna Instruments HI 9126 pH meter.

A 10 wt. % solution was made by first diluting the composition (C) with water, for example 450 mL of water was added to 50 g of composition (C). The 10 wt. % solution of composition (C) was continued stirring until the composition (C) was completely dissolved in the aqueous phase. Then, the pH of the 10 wt. % solution of composition (C) was measured with a pH electrode in combination with a temperature sensor, which automatically corrects the pH for the temperature. The reported pH value was uniformly corrected to a temperature of 20 °C.

### General procedure for manufacturing composition (C):

Comparative Example 1 (CEx1) and Examples 2 - 6 (Ex2 to Ex6) were prepared by admixing and homogenizing together during 30 minutes, the various ingredients, as described in Table 1 (i.e. nature and amounts) together with standard additional ingredients such as gelling agents, micronutrients, surfactants, humectants, dispersing agents, and antifoaming agents. The admixing of the various ingredients was carried out by using an electric stirrer.

In Comparative Example 1 (CEx1), use is made of potassium tetrathionate (K₂S₄O₆), which is described in a composition suitable as a liquid fertilizer in EP 0 949 221 A1.

In Example 2 (Ex2), use is made of compound (S) according to formula (III_{S}-g), according to the present invention.

In Examples 3-6 (Ex3 to Ex6), use is made of compound (S) according to formula (II_{S}-a), according to the present invention.

All contents in Table 1 are given in wt. %, relative to the total weight of the respective fertilizer compositions, unless stated otherwise.

Table 1 further summarizes the total content of the different elements sulphur (S), calcium (Ca), phosphorus (P), nitrogen (N), potassium (K), and magnesium (Mg). These total contents were calculated according to general practice to those skilled in the art in fertilizer compositions.

The viscosities of Comparative Example 1 (CEx1) and Examples 2 - 6 (Ex2 to Ex6), respectively, were measured according to the test method, as described above, and the results are summarized in Table 1.

The pH of the 10 wt. % solutions in H₂O of Comparative Example 1 (CEx1) and Examples 2 - 6 (Ex2 to Ex6), respectively, were measured according to the test method, as described above, and the results are summarized in Table 1.

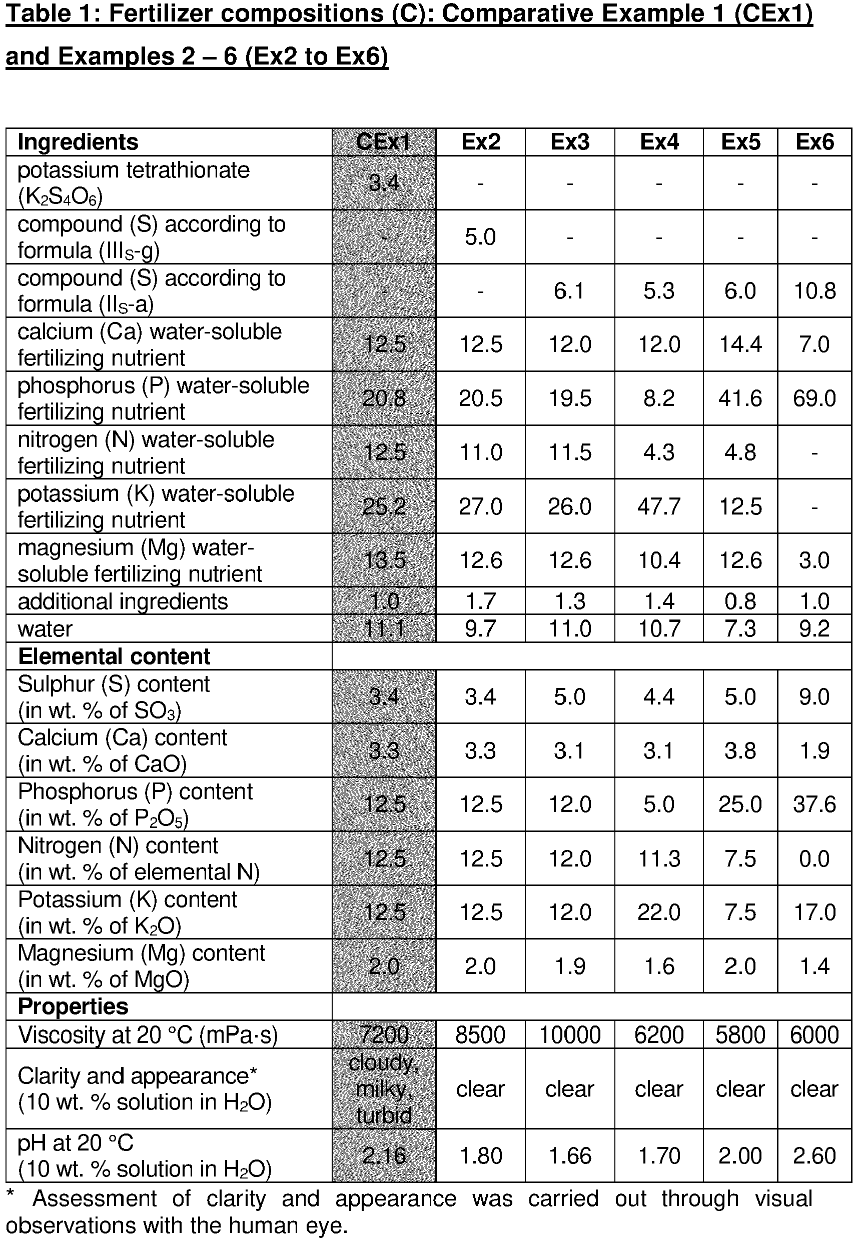

The results in Table 1 show that when a compound (S) according to formula (III_{S}-g) (i.e. Ex2) or compound (S) according to formula (lls-a) (i.e. Ex3 to Ex6), respectively, is selected as the sulphur macronutrient in fertilizing compositions, it can be combined with various fertilizing nitrogen, phosphorus, potassium, calcium, and magnesium macronutrients at varying and high concentrations within one single concentrate. In particular, in Ex5 even high contents of phosphorus (P), respectively 25.0 wt. %, can be combined with high contents of Calcium (Ca), respectively 3.8 wt. %. In another example, Ex6 has high contents of phosphorus (P) and potassium (K), respectively 37.6 wt. % and 17.0 wt. %, and no nitrogen (N) fertilizing nutrient.

Table 1 further shows that 10 wt. % solutions of Ex2 to Ex6 in water result in clear and homogeneous solutions without any precipitation, while a 10 wt. % solution of CEx1, having an identical NPKCaMgS grade as Ex2, results in a non-homogeneous turbid solution with a milky and cloudy appearance while having an unpleasant scent.

## Claims

1. A fertilizer composition [composition (C), herein after] wherein the composition (C) comprises, relative to the total weight of composition (C):
a) from 0.5 to 32.0 weight percentage [wt. %, herein after] of at least one sulphur (S) water-soluble fertilizing nutrient chosen from a sulphur compound according to general formula (I_{S}) [compound (S), herein after] 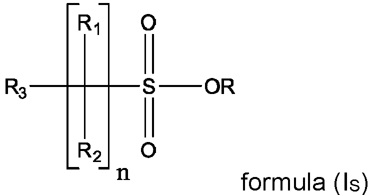 wherein
- each of R is selected from H or an inorganic cation;
- n is an integer in the range from 1, 2, or 3;
- each of R₁ and R₂, equal to or different from each other and at each occurrence, is independently selected from the group consisting of hydrogen, C₁₋₄ alkyl, OR₄, N(R₄)₂, Si(R₄)₃, C(O)OR₄, and CON(R₄)₂, and wherein each of R₄, equal to or different from each other and at each occurrence, is independently selected from the group consisting of hydrogen, C₁₋₄ alkyl, hydroxyl protecting group, and amine protecting group;
- each of R₃ is independently selected from the group consisting of hydrogen, C₁₋₄ alkyl, C₂₋₄ alkenyl, C₂₋₄ alkynyl, OR₅, N(R₅)₂, Si(R₅)₃, C(O)OR₅, and CON(R₅)₂, and wherein each of R₅, equal to or different from each other and at each occurrence, is independently selected from the group consisting of hydrogen, C₁₋₄ alkyl, hydroxyl protecting group, and amine protecting group;
b) from 1.0 to 20.0 wt. % of water; and
wherein the composition (C) comprises at least one phosphorus (P) and calcium (Ca) water-soluble fertilizing nutrient and wherein the composition (C), relative to the total weight of composition (C), has a total calcium (Ca) content from 0.5 to 32.0 wt. %, as expressed in wt. % of CaO, and a total phosphorus (P) content from 3.0 to 65.0 wt. %, as expressed in wt. % of P₂O₅.

2. The composition (C) according to claim 1, wherein the compound (S) is selected from those of formulae (Ils) or (Ills) herein below: 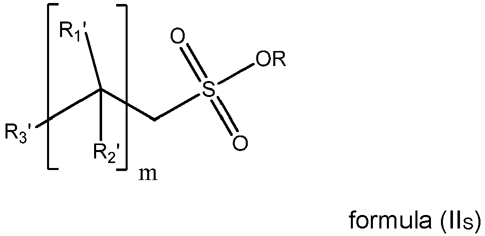 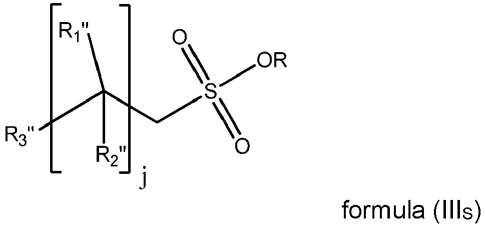 wherein
- each of R is selected from H, sodium ion, potassium ion, magnesium ion, or calcium ion;
- each of m is an integer in the range from 0, 1, or 2;
- each of R₁' is independently selected from the group consisting of hydrogen, methyl, ethyl, propyl, and isopropyl;
- each of R₂' is independently selected from the group consisting of hydrogen, methyl, ethyl, propyl, and isopropyl;
- each of R₃' is independently selected from the group consisting of hydrogen, C₁₋₄ alkyl, and Si(R₅')₃, and wherein each of R₅', independently from each other and at each occurrence, is C₁₋₄ alkyl;
- each of j is an integer in the range from 0, 1, or 2;
- each of R₁" is independently selected from the group consisting of hydrogen, C₁₋₄ alkyl, OR₄", N(R₄")₂, and C(O)OR₄", and wherein each of R₄", equal to or different from each other and at each occurrence, is independently selected from the group consisting of hydrogen, C₁₋₄ alkyl, hydroxyl protecting group, and amine protecting group;
- each of R₂" is independently selected from the group consisting of hydrogen, C₁₋₄ alkyl, OR₄", N(R₄")₂, and C(O)OR₄", and wherein each of R₄", equal to or different from each other and at each occurrence, is independently selected from the group consisting of hydrogen, C₁₋₄ alkyl, hydroxyl protecting group, and amine protecting group;
- each of R₃" is independently selected from the group consisting of hydrogen, OR₅", N(R₅")₂, C(O)ORs", and CON(R₅")₂, and wherein each of R₅", equal to or different from each other and at each occurrence, is independently selected from the group consisting of hydrogen, C₁₋₄ alkyl, hydroxyl protecting group, and amine protecting.

3. The composition (C) according to any one of claims 1 or 2, wherein the compound (S) is selected from those of formulae (Ils-a) to (lls-e) or those of formulae (III_{S}-a) to (III_{S}-j) herein below:

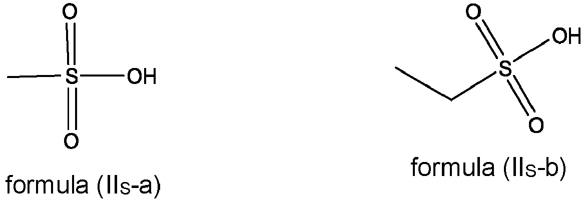

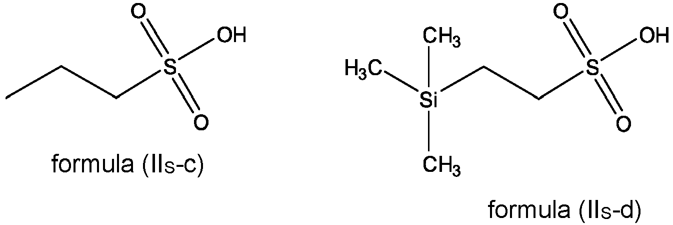

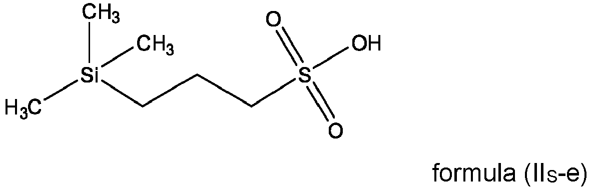

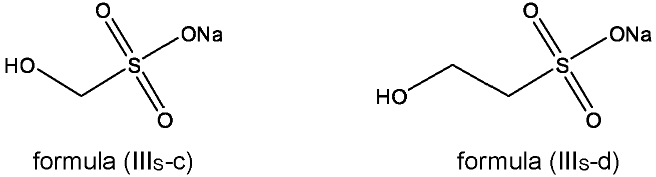

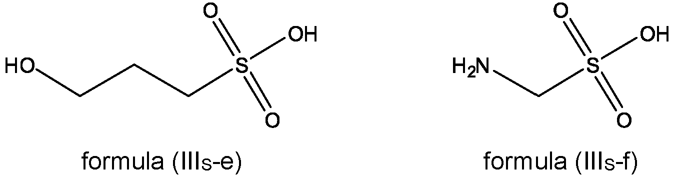

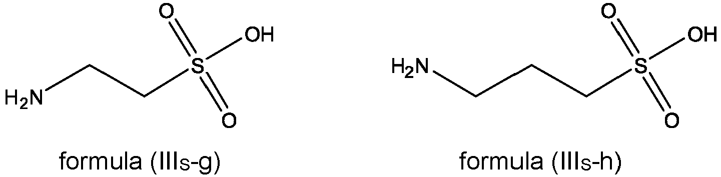

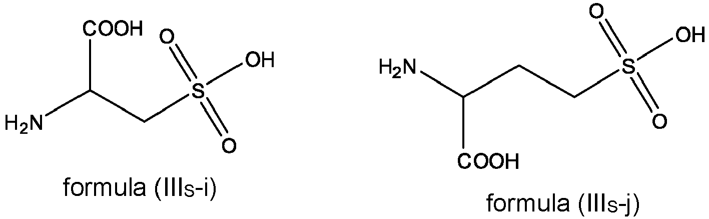

4. The composition (C) according to any one of claims 1 to 3, wherein the compound (S), relative to the total weight of the composition (C), is present in an amount from 1.0 to 27.0 wt. %, preferably in an amount from 2.0 to 22.0 wt. %, preferably in an amount from 3.00 to 19.00 wt. %, preferably in an amount from 3.5 to 17.0 wt. %, more preferably in an amount from 4.0 to 14.0 wt. %, and more preferably in an amount from 4.5 to 12.0 wt. %.

5. The composition (C) according to any one of claims 1 to 4, wherein the at least one phosphorus (P) and calcium (Ca) water-soluble fertilizing nutrient is selected from the group consisting of phosphoric acid, phosphorous acid, hypophosphorous acid, superphosphate, concentrated superphosphate (CSP), ammoniated superphosphate, ammonium phosphate, monoammonium phosphate (MAP), diammonium phosphate (DAP), triammonium phosphate (TAP), ammonium polyphosphate (APP), nitrophosphate, nitric phosphate, potassium phosphate, monopotassium phosphate (MKP), dipotassium phosphate (DKP), tripotassium phosphate (TKP), calcium nitrate, calcium chloride, calcium hydroxide, calcium iodate, calcium silicate, calcium cyanamide, nitrolime, calcium carbonate, calcium ammonium nitrate (CAN), calcium acetate, calcium citrate, calcium gluconate, calcium lactate, calcium ligosulphonate, dicalcium phosphate (DCP), hydroxyapatite, tricalcium phosphate (TCP), monocalcium phosphate (MCP), and hydrates thereof.

6. The composition (C) according to any one of claims 1 to 5, wherein the composition (C) has a total calcium (Ca) content, as expressed in wt. % of CaO, from 1.0 to 26.0 wt. %, preferably from 1.3 to 20.0 wt. %, preferably from 1.6 to 14.0 wt. %, preferably from 1.8 to 10.0 wt. %, preferably from 2.0 to 8.0 wt. %, relative to the total weight of the composition (C).

7. The composition (C) according to any one of claims 1 to 6, wherein the composition (C) has a total phosphorus (P) content, as expressed in wt. % of P₂O₅, from 3.5 to 58.0 wt. %, preferably from 4.0 to 50.0 wt. %, preferably from 4.5 to 44.0 wt. %, preferably from 4.8 to 40.0 wt. %, preferably from 5.0 to 38.0 wt. %, relative to the total weight of the composition (C).

8. The composition (C) according to any one of claims 1 to 7, wherein the composition (C) has a total nitrogen (N) content from 2.5 to 35.0 wt. %, as expressed in wt. % of elemental N, relative to the total weight of the composition (C).

9. The composition (C) according to any one of claims 1 to 8, wherein the composition (C) has a total potassium (K) content from 2.0 to 60.0 wt. %, as expressed in wt. % of K₂O, relative to the total weight of the composition (C).

10. The composition (C) according to any one of claims 1 to 9, wherein the composition (C) has a total magnesium (Mg) content from 0.5 to 9.0 wt. %, as expressed in wt. % of MgO, relative to the total weight of the composition (C).

11. The composition (C) according to any one of claims 1 to 10, wherein the composition (C) comprises at least one gelling agent selected from the group consisting of gum Arabic, alginic acid, alginates, xanthan gum, guar gum, tragacanth gum, methyl cellulose, cellulose ethers, cellulose acetate, ethyl cellulose, hydroxyethyl cellulose, hydroxyethyl methyl cellulose, starch, gelatine, carrageenan, locust bean gum, pectin, succinoglycans, and pullulan.

12. The composition (C) according to claim 11, wherein the at least one gelling agent is present in an amount from 0.05 to 5.00 wt. %, relative to the total weight of the composition (C).

13. A method for the manufacturing of the composition (C), according to any one of claims 1 to 12, wherein the method comprises intimate admixing:
- from 1.0 to 20.0 wt. % of water;
- from 0.5 to 32.0 wt. % of the at least one compound (S) as defined in claims 1 to 3;
- at least one phosphorus (P) and calcium (Ca) water-soluble fertilizing nutrient in such an amount that the composition (C) has a total calcium (Ca) content from 0.5 to 32.0 wt. %, as expressed in wt. % of CaO, and a total phosphorus (P) content from 3.0 to 65.0 wt. %, as expressed in wt. % of P₂O₅;
- optionally at least one nitrogen (N) water-soluble fertilizing nutrient in such an amount that the composition (C) has a total nitrogen (N) content from 2.5 to 35.0 wt. %, as expressed in wt. % of elemental N;
- optionally at least one potassium (K) water-soluble fertilizing nutrient in such an amount that the composition (C) has a total potassium (K) content from 2.0 to 60.0 wt. %, as expressed in wt. % of K₂O;
- optionally at least one magnesium (Mg) water-soluble fertilizing nutrient in such an amount that the composition (C) has a total magnesium (Mg) content from 0.5 to 9.0 wt. %, as expressed in wt. % of MgO; and
- optionally from 0.05 to 5.00 wt. % of at least one gelling agent;
wherein all wt. % are relative to the total weight of the composition (C).

14. A formulation (F) obtained by diluting the composition (C), according to any one of claims 1 to 12, with a diluent.

15. A use of the composition (C), according to any one of claims 1 to 12, or the formulation (F), according to claim 14, comprises supplying said composition (C) or formulation (F) by spraying, atomizing, vaporizing, drenching, watering, squirting, sprinkling, pouring, fumigating, injecting, painting, seed treating, coating, immersing, soaking by using conventional equipment such as but not limited to a handpump, a backpack sprayer, or a boomsprayer.

## Patentansprüche

1. Eine Düngerzusammensetzung [nachstehend Zusammensetzung (C)], wobei die Zusammensetzung (C), in Bezug auf das Gesamtgewicht von Zusammensetzung (C), Folgendes umfasst:
a) von 0,5 bis 32,0 Gewichtsprozent [nachstehend Gew.-%] von mindestens einem Schwefel- (S) wasserlöslichen Düngenährstoff ausgewählt aus einer Schwefelverbindung nach der allgemeinen Formel (Is) [nachstehend Verbindung (S)] 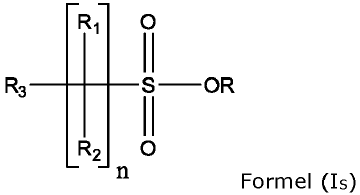 wobei
- jedes R ausgewählt ist aus H oder einem anorganischen Kation;
- n eine Ganzzahl im Bereich von 1, 2, oder 3 ist;
- jedes von R₁ und R₂, gleich wie oder unterschiedlich voneinander und bei jedem Vorkommen, unabhängig ausgewählt ist aus der Gruppe bestehend aus Wasserstoff, C₁₋₄-Alkyl, OR₄, N(R₄)₂, Si(R₄)₃, C(O)OR₄, und CON(R₄)₂, und wobei jedes R₄, gleich wie oder unterschiedlich voneinander und bei jedem Vorkommen, unabhängig ausgewählt ist aus der Gruppe bestehend aus Wasserstoff, C₁₋₄-Alkyl, Hydroxylschutzgruppe, und Aminschutzgruppe;
- jedes R₃ unabhängig ausgewählt ist aus der Gruppe bestehend aus Wasserstoff, C₁₋₄-Alkyl, C₂₋₄-Alkenyl, C₂₋₄-Alkynyl, ORs, N(R₅)₂, Si(R₅)₃, C(O)OR₅, und CON(R₅)₂, und wobei jedes R₅, gleich wie oder unterschiedlich voneinander und bei jedem Vorkommen, unabhängig ausgewählt ist aus der Gruppe bestehend aus Wasserstoff, C₁₋₄-Alkyl, Hydroxylschutzgruppe, und Aminschutzgruppe;
b) von 1,0 bis 20,0 Gew.-% Wasser; und
wobei die Zusammensetzung (C) mindestens einen Phosphor- (P) und Calcium-(Ca) wasserlöslichen Düngenährstoff umfasst und wobei die Zusammensetzung (C), in Bezug auf das Gesamtgewicht von Zusammensetzung (C), einen Gesamtgehalt an Calcium von 0,5 bis 32,0 Gew.-%, wie ausgedrückt in Gew.-% von CaO, und einen Gesamtgehalt an Phosphor (P) von 3,0 bis 65,0 Gew.-%, wie ausgedrückt in Gew.-% von P₂O₅, hat.

2. Die Zusammensetzung (C) nach Anspruch 1, wobei die Verbindung (S) ausgewählt ist aus jenen der Formeln (IIs) oder (IIIs) hier unten: 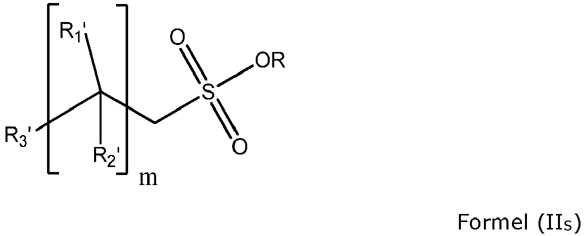 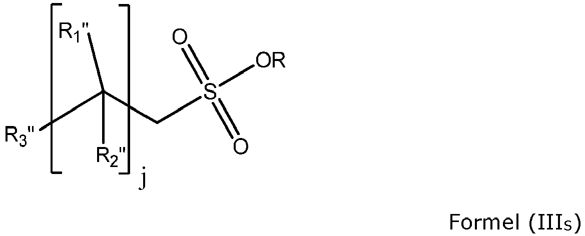 wobei
- jedes R ausgewählt ist aus H, Natriumion, Kaliumion, Magnesiumion, oder Calciumion;
- jedes m eine Ganzzahl im Bereich von 0, 1, oder 2 ist;
- jedes R₁' unabhängig ausgewählt ist aus der Gruppe bestehend aus Wasserstoff, Methyl, Ethyl, Propyl, und Isopropyl;
- jedes R₂' unabhängig ausgewählt ist aus der Gruppe bestehend aus Wasserstoff, Methyl, Ethyl, Propyl, und Isopropyl;
- jedes R₃' unabhängig ausgewählt ist aus der Gruppe bestehend aus Wasserstoff, C₁₋₄-Alkyl, und Si(R₅')₃, und wobei jedes Rs', unabhängig voneinander und bei jedem Vorkommen, C₁₋₄-Alkyl ist;
- jedes j eine Ganzzahl im Bereich von 0, 1, oder 2 ist;
- jedes R₁" unabhängig ausgewählt ist aus der Gruppe bestehend aus Wasserstoff, C₁₋₄-Alkyl, OR₄", N(R₄")₂, und C(O)OR₄", und wobei jedes R₄", gleich wie oder unterschiedlich voneinander und bei jedem Vorkommen, unabhängig ausgewählt ist aus der Gruppe bestehend aus Wasserstoff, C₁₋₄-Alkyl, Hydroxylschutzgruppe, und Aminschutzgruppe;
- jedes R₂" unabhängig ausgewählt ist aus der Gruppe bestehend aus Wasserstoff, C₁₋₄-Alkyl, OR₄", N(R₄")₂, und C(O)OR₄", und wobei jedes R₄", gleich wie oder unterschiedlich voneinander und bei jedem Vorkommen, unabhängig ausgewählt ist aus der Gruppe bestehend aus Wasserstoff, C₁₋₄-Alkyl, Hydroxylschutzgruppe, und Aminschutzgruppe;
- jedes R₃" unabhängig ausgewählt ist aus der Gruppe bestehend aus Wasserstoff, OR₅", N(R₅")₂, und C(O)OR₅", und CON(R₅")₂, und wobei jedes R₅", gleich wie oder unterschiedlich voneinander und bei jedem Vorkommen, unabhängig ausgewählt ist aus der Gruppe bestehend aus Wasserstoff, C₁₋₄-Alkyl, Hydroxylschutzgruppe, und Aminschutz.

3. Die Zusammensetzung (C) nach irgendeinem der Ansprüche 1 oder 2, wobei die Verbindung (S) ausgewählt ist aus jenen der Formeln (IIs-a) bis (IIs-e) oder jenen der Formeln (IIIs-a) bis (IIIs-j) hier unten:

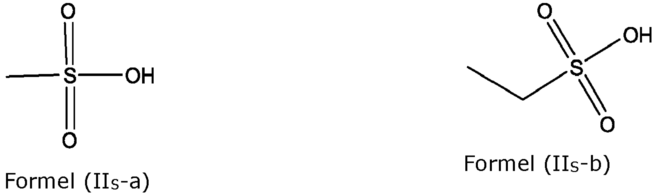

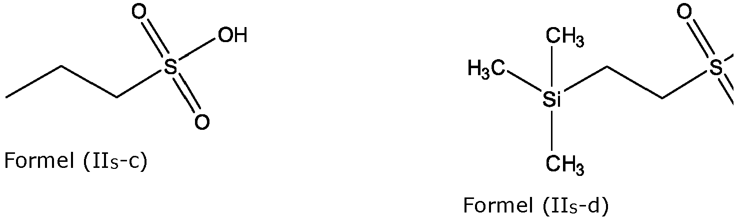

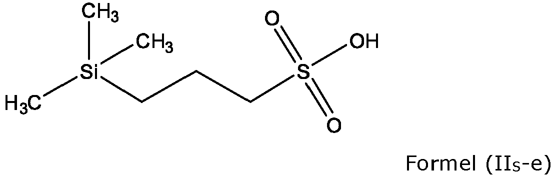

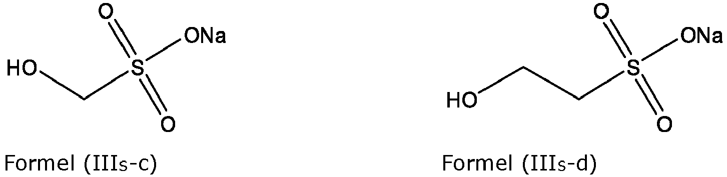

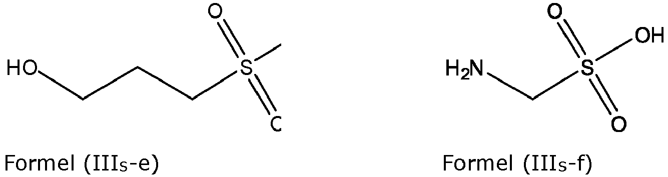

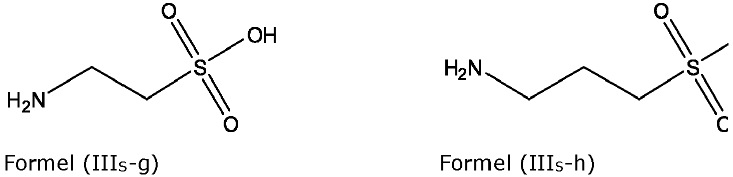

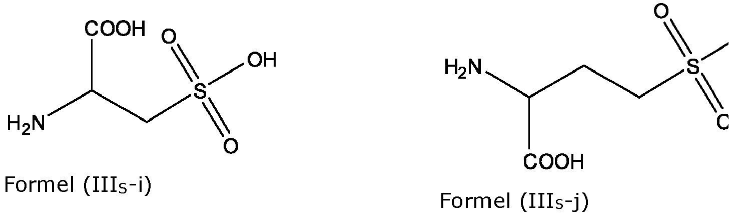

4. Die Zusammensetzung (C) nach irgendeinem der Ansprüche 1 bis 3, wobei die Verbindung (S), in Bezug auf das Gesamtgewicht der Zusammensetzung (C), anwesend ist in einer Menge von 1,0 bis 27,0 Gew.-%, bevorzugt in einer Menge von 2,0 bis 22,0 Gew.-%, bevorzugt in einer Menge von 3,00 bis 19,00 Gew.-%, bevorzugt in einer Menge von 3,5 bis 17,0 Gew.-%, noch besser in einer Menge von 4,0 bis 14,0 Gew.-%, und noch besser in einer Menge von 4,5 bis 12,0 Gew.-%.

5. Die Zusammensetzung (C) nach irgendeinem der Ansprüche 1 bis 4, wobei der mindestens eine Phosphor- (P) und Calcium- (Ca) wasserlösliche Düngenährstoff ausgewählt ist aus der Gruppe bestehend aus Phosphorsäure, Phosphonsäure, Phosphinsäure, Superphosphat, konzentriertem Superphosphat (CSP), ammonisiertem Superphosphat, Ammoniumphosphat, Monoammoniumphosphat (MAP), Diammoniumphosphat (DAP), Triammoniumphosphat (TAP), Ammoniumpolyphosphat (APP), Nitrophosphat, Stickstoffphosphat, Kaliumphosphat, Monokaliumphosphat (MKP), Dikaliumphosphat (DKP), Trikaliumphosphat (TKP), Calciumnitrat, Calciumchlorid, Calciumhydroxid, Calciumiodat, Calciumsilicat, Calciumcyanamid, Kalkstickstoff, Calciumcarbonat, Calciumammoniumnitrat (CAN), Calciumacetat, Calciumcitrat, Calciumgluconat, Calciumlactat, Calciumligosulphonat, Dicalciumphosphat (DCP), Hydroxylapatit, Tricalciumphosphat (TCP), Monocalciumphosphat (MCP), und Hydraten davon.

6. Die Zusammensetzung (C) nach irgendeinem der Ansprüche 1 bis 5, wobei die Zusammensetzung (C) einen Gesamtgehalt an Calcium (Ca), wie ausgedrückt in Gew.-% von CaO, von 1,0 bis 26,0 Gew.-%, bevorzugt von 1,3 bis 20,0 Gew.-%, bevorzugt von 1,6 bis 14,0 Gew.-%, bevorzugt von 1,8 bis 10,0 Gew.-%, bevorzugt von 2,0 bis 8,0 Gew.-%, in Bezug auf das Gesamtgewicht der Zusammensetzung (C), hat.

7. Die Zusammensetzung (C) nach irgendeinem der Ansprüche 1 bis 6, wobei die Zusammensetzung (C) einen Gesamtgehalt an Phosphor (P), wie ausgedrückt in Gew.-% von P₂O₅, von 3,5 bis 58,0 Gew.-%, bevorzugt von 4,0 bis 50,0 Gew.-%, bevorzugt von 4,5 bis 44,0 Gew.-%, bevorzugt von 4,8 bis 40,0 Gew.-%, bevorzugt von 5,0 bis 38,0 Gew.-%, in Bezug auf das Gesamtgewicht der Zusammensetzung (C), hat.

8. Die Zusammensetzung (C) nach irgendeinem der Ansprüche 1 bis 7, wobei die Zusammensetzung (C) einen Gesamtgehalt an Stickstoff (N) von 2,5 bis 35,0 Gew.-%, wie ausgedrückt in Gew.-% von elementarem N, in Bezug auf das Gesamtgewicht der Zusammensetzung (C), hat.

9. Die Zusammensetzung (C) nach irgendeinem der Ansprüche 1 bis 8, wobei die Zusammensetzung (C) einen Gesamtgehalt an Kalium (K) von 2,0 bis 60,0 Gew.-%, wie ausgedrückt in Gew.-% von K₂O, in Bezug auf das Gesamtgewicht der Zusammensetzung (C), hat.

10. Die Zusammensetzung (C) nach irgendeinem der Ansprüche 1 bis 9, wobei die Zusammensetzung (C) einen Gesamtgehalt an Magnesium (Mg) von 0,5 bis 9,0 Gew.-%, wie ausgedrückt in Gew.-% von MgO, in Bezug auf das Gesamtgewicht der Zusammensetzung (C), hat.

11. Die Zusammensetzung (C) nach irgendeinem der Ansprüche 1 bis 10, wobei die Zusammensetzung (C) mindestens ein Geliermittel ausgewählt aus der Gruppe bestehend aus Gummi arabicum, Alginsäure, Alginaten, Xanthangummi, Guargummi, Traganth, Methylcellulose, Celluloseethern, Celluloseacetat, Ethylcellulose, Hydroxyethylcellulose, Hydroxyethylmethylcellulose, Stärke, Gelatine, Carrageen, Johannisbrotgummi, Pectin, Succinoglycanen, und Pullulan umfasst.

12. Die Zusammensetzung (C) nach Anspruch 11, wobei das zumindest eine Geliermittel in einer Menge von 0,05 bis 5,00 Gew.-%, in Bezug auf das Gesamtgewicht der Zusammensetzung (C), anwesend ist.

13. Ein Verfahren zur Herstellung der Zusammensetzung (C), nach irgendeinem der Ansprüche 1 bis 12, wobei das Verfahren inniges Vermischen der folgenden Komponenten umfasst:
- von 1,0 bis 20,0 Gew.-% Wasser;
- von 0,5 bis 32,0 Gew.-% der mindestens einen Verbindung (S), wie definiert in den Ansprüchen 1 bis 3;
- mindestens einen Phosphor- (P) und Calcium- (Ca) wasserlöslichen Düngenährstoff in einer solchen Menge, dass die Zusammensetzung (C) einen Gesamtgehalt an Calcium (Ca) von 0,5 bis 32,0 Gew.-%, wie ausgedrückt in Gew.-% von CaO, und einen Gesamtgehalt an Phosphor (P) von 3,0 bis 65,0 Gew.-%, wie ausgedrückt in Gew.-% von P₂O₅, hat;
- optional mindestens einen Stickstoff- (N) wasserlöslichen Düngenährstoff in einer solchen Menge, dass die Zusammensetzung (C) einen Gesamtgehalt an Stickstoff (N) von 2,5 bis 35,0 Gew.-%, wie ausgedrückt in Gew.-% von elementarem N, hat;
- optional mindestens einen Kalium- (K) wasserlöslichen Düngenährstoff in einer solchen Menge, dass die Zusammensetzung (C) einen Gesamtgehalt an Kalium (K) von 2,0 bis 60,0 Gew.-%, wie ausgedrückt in Gew.-% von K₂O, hat;
- optional mindestens einen Magnesium- (Mg) wasserlöslichen Düngenährstoff in einer solchen Menge, dass die Zusammensetzung (C) einen Gesamtgehalt an Magnesium (Mg) von 0,5 bis 9,0 Gew.-%, wie ausgedrückt in Gew.-% von MgO, hat; und
- optional von 0,05 bis 5,00 Gew.-% von mindestens einem Geliermittel;
wobei sich alle Gew.-% auf das Gesamtgewicht der Zusammensetzung (C) beziehen.

14. Eine Rezeptur (F) erhalten durch Verdünnen der Zusammensetzung (C), nach irgendeinem der Ansprüche 1 bis 12, mit einem Verdünnungsmittel.

15. Eine Verwendung der Zusammensetzung (C), nach irgendeinem der Ansprüche 1 bis 12, oder der Rezeptur (F), nach Anspruch 14, welche das Bereitstellen der erwähnten Zusammensetzung (C) oder Rezeptur (F) durch Sprühen, Zerstäuben, Verdampfen, Tränken, Wässern, Spritzen, Sprenkeln, Gießen, Begasen, Injizieren, Streichen, Samenbehandeln, Beschichten, Tauchen, Einweichen durch Einsatz herkömmlicher Ausrüstung wie, aber nicht darauf beschränkt, eine Handpumpe, ein Rückensprühgerät oder ein Spritzgestänge, umfasst.

## Revendications

1. Composition d'engrais [composition (C), ci-après] dans laquelle la composition (C) comprend, par rapport au poids total de la composition (C) :
a) de 0,5 à 32,0 % en poids [% en poids, ci-après] d'au moins un nutriment fertilisant soluble dans l'eau à base de soufre (S) choisi parmi un composé soufré répondant à la formule générale (Is) [composé (S), ci-après] 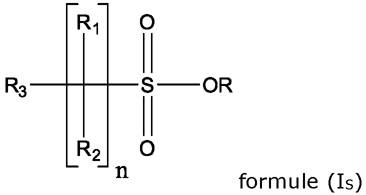 dans laquelle
- chacun des R est choisi parmi H ou un cation inorganique ;
- n est un nombre entier compris entre 1, 2 ou 3 ;
- chacun de R₁ et R₂, égaux ou différents l'un de l'autre et à chaque occurrence, sont indépendamment choisis dans le groupe constitué de l'hydrogène, l'alkyle en C₁₋₄, OR₄, N(R₄)₂, Si(R₄)₃, C(O)OR₄ et CON(R₄)₂, et dans lequel R₄, égal ou différent l'un de l'autre et à chaque occurrence, est indépendamment choisi dans le groupe constitué de l'hydrogène, l'alkyle en C₁₋₄, le groupe protecteur d'hydroxyle et le groupe protecteur d'amine ;
- chacun des R₃ est indépendamment choisi dans le groupe constitué de l'hydrogène, l'alkyle en C₁₋₄, l'alcényle en C₂₋₄, l'alcynyle en C₂₋₄, ORs, N(R₅)₂, Si(R₅)₃, C(O)ORs, et CON(R₅)₂, et dans lequel chacun des R₅, égal ou différent l'un de l'autre et à chaque occurrence, est indépendamment choisi dans le groupe constitué de l'hydrogène, l'alkyle en C₁₋₄, le groupe protecteur d'hydroxyle et le groupe protecteur d'amine ;
b) de 1,0 à 20,0 % en poids d'eau ; et
dans laquelle la composition (C) comprend au moins un nutriment fertilisant soluble dans l'eau à base de phosphore (P) et de calcium (Ca) et dans laquelle la composition (C), par rapport au poids total de la composition (C), a une teneur totale en calcium (Ca) comprise entre 0,5 et 32,0 % en poids, exprimée en % en poids de CaO, et une teneur totale en phosphore (P) comprise entre 3,0 et 65,0 % en poids, exprimée en % en poids de P₂O₅.

2. Composition (C) selon la revendication 1, dans laquelle le composé (S) est choisi parmi ceux des formules (IIs) ou (IIIs) ci-dessous : 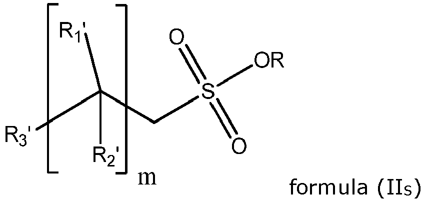 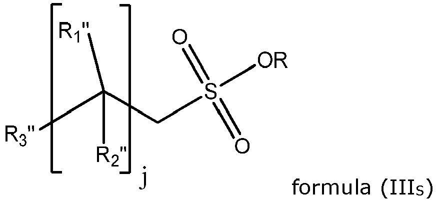 dans laquelle
- chacun des R est choisi parmi H, un ion sodium, un ion potassium, un ion magnésium ou un ion calcium ;
- chacun de m est un nombre entier compris entre 0, 1 ou 2 ;
- chacun des R₁' est choisi indépendamment dans le groupe constitué de l'hydrogène, le méthyle, l'éthyle, le propyle et l'isopropyle ;
- chacun des R₂' est choisi indépendamment dans le groupe constitué de l'hydrogène, le méthyle, l'éthyle, le propyle et l'isopropyle ;
- chacun des R₃' est indépendamment choisi dans le groupe constitué de l'hydrogène, l'alkyle en C₁₋₄, et Si(R₅')₃, et dans lequel chacun des Rs', indépendamment l'un de l'autre et à chaque occurrence, est un alkyle en C₁₋₄ ;
- chacun de j est un nombre entier compris entre 0, 1 ou 2 ;
- chacun des R₁" est indépendamment choisi dans le groupe constitué de l'hydrogène, l'alkyle en C₁₋₄, OR₄", N(R₄")₂ et C(O)OR₄", et dans laquelle chacun des R₄", égal ou différent l'un de l'autre et à chaque occurrence, est indépendamment choisi dans le groupe constitué de l'hydrogène, l'alkyle en C₁₋₄, le groupe protecteur d'hydroxyle et le groupe protecteur d'amine ;
- chacun des R₂" est indépendamment choisi dans le groupe constitué de l'hydrogène, l'alkyle en C₁₋₄, OR₄", N(R₄")₂ et C(O)OR₄", et où chacun des R₄", égal ou différent l'un de l'autre et à chaque occurrence, est indépendamment choisi dans le groupe constitué de l'hydrogène, l'alkyle en C₁₋₄, le groupe protecteur d'hydroxyle et le groupe protecteur d'amine ;
- chacun des R₃" est indépendamment choisi dans le groupe constitué de l'hydrogène, OR₅", N(R₅")₂, C(O)ORs" et CON(R₅")₂, et où chacun des R₅", égal ou différent l'un de l'autre et à chaque occurrence, est indépendamment choisi dans le groupe constitué de l'hydrogène, l'alkyle en C₁₋₄, le groupe protecteur d'hydroxyle et le groupe protecteur d'amine.

3. Composition (C) selon l'une quelconque des revendications 1 ou 2, dans laquelle le composé (S) est choisi parmi ceux des formules (IIs-a) à (IIs-e) ou ceux des formules (IIIs-a) à (IIIs-j) ci-après :

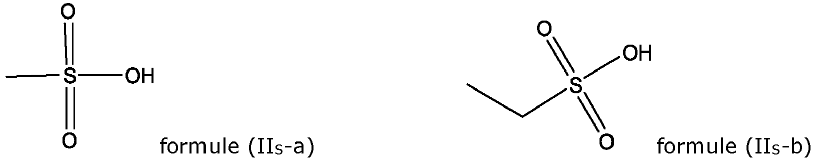

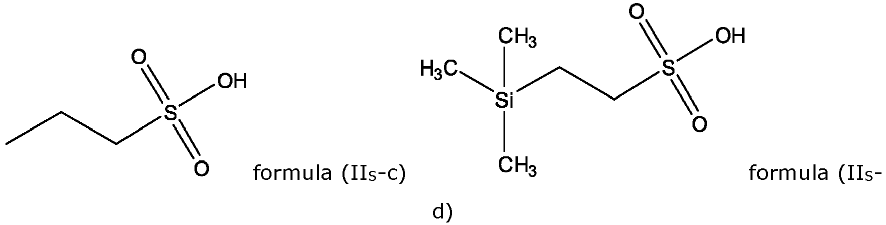

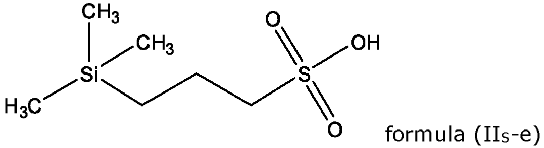

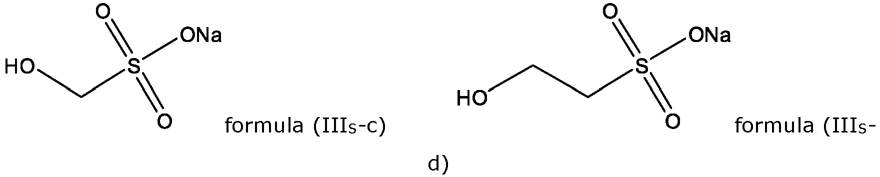

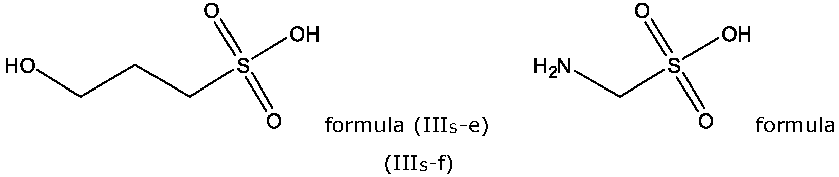

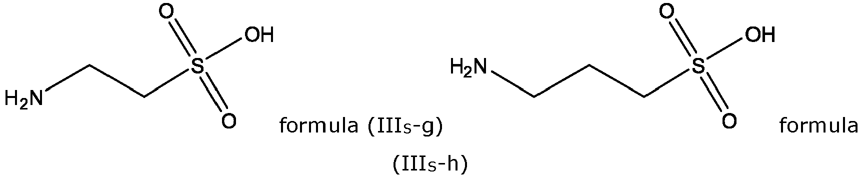

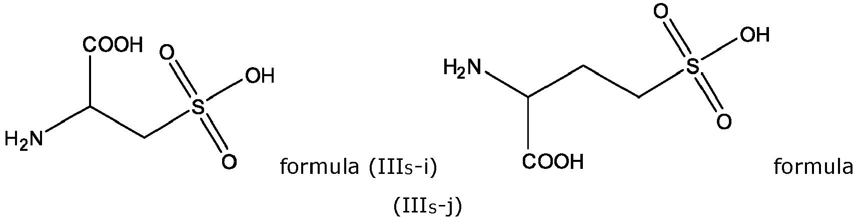

4. Composition (C) selon l'une quelconque des revendications 1 à 3, dans laquelle le composé (S), par rapport au poids total de la composition (C), est présent en une quantité allant de 1,0 à 27,0 % en poids, de préférence en une quantité allant de 2.0 à 22,0 % en poids, de préférence en une quantité de 3,00 à 19,00 % en poids, de préférence en une quantité de 3,5 à 17,0 % en poids, de préférence en une quantité de 4,0 à 14,0 % en poids, et de préférence en une quantité de 4,5 à 12,0 % en poids.

5. Composition (C) selon l'une quelconque des revendications 1 à 4, dans laquelle au moins un nutriment fertilisant soluble dans l'eau à base de phosphore (P) et de calcium (Ca) est choisi dans le groupe constitué de l'acide phosphorique, de l'acide phosphoreux, de l'acide hypophosphoreux, superphosphate, superphosphate concentré (CSP), superphosphate ammonié, phosphate d'ammonium, phosphate monoammonique (MAP), phosphate diammonique (DAP), phosphate triammonique (TAP), polyphosphate d'ammonium (APP), nitrophosphate, phosphate nitrique, phosphate de potassium, phosphate monopotassique (MKP), phosphate dipotassique (DKP), phosphate tripotassique (TKP), nitrate de calcium, chlorure de calcium, hydroxyde de calcium, iodate de calcium, silicate de calcium, cyanamide de calcium, nitrolime, carbonate de calcium, nitrate d'ammonium de calcium (CAN), acétate de calcium, citrate de calcium, gluconate de calcium, lactate de calcium, ligosulfonate de calcium, phosphate dicalcique (DCP), hydroxyapatite, phosphate tricalcique (TCP), phosphate monocalcique (MCP), et leurs hydrates.

6. Composition (C) selon l'une quelconque des revendications 1 à 5, dans laquelle la composition (C) a une teneur totale en calcium (Ca), exprimée en % en poids de CaO, de 1,0 à 26,0 % en poids, de préférence de 1,3 à 20,0 % en poids, de préférence de 1,6 à 14,0 % en poids, de préférence de 1,8 à 10,0 % en poids, de préférence de 2,0 à 8,0 % en poids, par rapport au poids total de la composition (C).

7. Composition (C) selon l'une quelconque des revendications 1 à 6, dans laquelle la composition (C) a une teneur totale en phosphore (P), exprimée en % en poids de P₂O₅, de 3,5 à 58,0 % en poids, de préférence de 4,0 à 50,0 % en poids, de préférence de 4,5 à 44,0 % en poids, de préférence de 4,8 à 40,0 % en poids, de préférence de 5,0 à 38,0 % en poids, par rapport au poids total de la composition (C).

8. Composition (C) selon l'une quelconque des revendications 1 à 7, dans laquelle la composition (C) a une teneur totale en azote (N) de 2,5 à 35,0 % en poids, exprimée en % en poids de N élémentaire, par rapport au poids total de la composition (C).

9. Composition (C) selon l'une quelconque des revendications 1 à 8, dans laquelle la composition (C) a une teneur totale en potassium (K) de 2,0 à 60,0 % en poids, exprimée en % en poids de K₂O, par rapport au poids total de la composition (C).

10. Composition (C) selon l'une quelconque des revendications 1 à 9, dans laquelle la composition (C) a une teneur totale en magnésium (Mg) de 0,5 à 9,0 % en poids, exprimée en % en poids de MgO, par rapport au poids total de la composition (C).

11. Composition (C) selon l'une quelconque des revendications 1 à 10, dans laquelle la composition (C) comprend au moins un agent gélifiant choisi dans le groupe constitué de la gomme arabique, de l'acide alginique, des alginates, de la gomme xanthane, de la gomme guar, de la gomme adragante, méthylcellulose, éthers de cellulose, acétate de cellulose, éthylcellulose, hydroxyéthylcellulose, hydroxyéthylméthylcellulose, amidon, gélatine, carraghénane, gomme de caroube, pectine, succinoglycanes et pullulan.

12. Composition (C) selon la revendication 11, dans laquelle ledit au moins un agent gélifiant est présent en une quantité allant de 0,05 à 5,00 % en poids, par rapport au poids total de la composition (C).

13. Procédé de fabrication de la composition (C), selon l'une quelconque des revendications 1 à 12, dans lequel le procédé comprend un mélange intime :
- de 1,0 à 20,0 % en poids d'eau ;
- de 0,5 à 32,0 % en poids d'au moins un composé (S) tel que défini dans les revendications 1 à 3 ;
- au moins un nutriment fertilisant soluble dans l'eau à base de phosphore (P) et de calcium (Ca) en quantité telle que la composition (C) présente une teneur totale en calcium (Ca) comprise entre 0,5 et 32,0 % en poids, exprimée en % en poids de CaO, et une teneur totale en phosphore (P) comprise entre 3,0 et 65,0 % en poids, exprimée en % en poids de P₂O₅ ;
- éventuellement, au moins un nutriment fertilisant soluble dans l'eau à base de l'azote (N), en quantité telle que la composition (C) présente une teneur totale en azote (N) comprise entre 2,5 et 35,0 % en poids, exprimée en % en poids d'azote élémentaire ;
- éventuellement, au moins un nutriment fertilisant soluble dans l'eau à base de potassium (K) en quantité telle que la composition (C) a une teneur totale en potassium (K) comprise entre 2,0 et 60,0 % en poids, exprimée en % en poids de K₂O ;
- éventuellement, au moins un nutriment fertilisant soluble dans l'eau à base de magnésium (Mg) dans une quantité telle que la composition (C) a une teneur totale en magnésium (Mg) comprise entre 0,5 et 9,0 % en poids, exprimée en % en poids de MgO ; et
- éventuellement de 0,05 à 5,00 % en poids d'au moins un agent gélifiant ;
où tous les % en poids sont relatifs au poids total de la composition (C).

14. Formulation (F) obtenue en diluant la composition (C), selon l'une quelconque des revendications 1 à 12, avec un diluant.

15. Utilisation de la composition (C), selon l'une quelconque des revendications 1 à 12, ou de la formulation (F), selon la revendication 14, consiste à fournir ladite composition (C) ou formulation (F) par pulvérisation, atomisation, vaporisation, trempage, arrosage, giclage, aspersion, versement, fumigation, injection, peinture, traitement des semences, enrobage, immersion, trempage à l'aide d'un équipement conventionnel tel que, sans s'y limiter, une pompe à main, un pulvérisateur à dos ou une rampe d'aspersion.
